# EUROPÄISCHE PATENTSCHRIFT

(11) **EP 2 739 667 B1**
(45) Veröffentlichungstag und Bekanntmachung des Hinweises auf die Patenterteilung: **30.03.2016**
(21) Anmeldenummer: 12733090.0
(22) Anmeldetag: 04.07.2012
(51) Int. Cl.: C08G 65/00

(54) **VERFAHREN ZUR HERSTELLUNG VON VERZWEIGTEN POLYETHERCARBONATEN UND IHRE VERWENDUNG**
METHOD FOR PRODUCING BRANCHED POLYETHERCARBONATES AND USE THEREOF
PROCÉDÉ DE PRODUCTION DE POLYÉTHERCARBONATES RAMIFIÉS ET UTILISATION DE CEUX-CI

(30) Priorität: 03.08.2011 DE 102011109614
(43) Veröffentlichungstag der Anmeldung: 11.06.2014
(73) Patentinhaber: Evonik Degussa GmbH, 45128 Essen (DE)
(72) Erfinder: LOBERT, Matthias, 45309 Essen (DE); SCHMITZ, Sarah, 47198 Duisburg (DE); SCHUBERT, Frank, 47506 Neukirchen-Vluyn (DE); HUBEL, Roland, 45136 Essen (DE); HAHNEL, Helmut, 47226 Duisburg (DE)
(86) Internationale Anmeldenummer: PCT/EP2012/062959
(87) Internationale Veröffentlichungsnummer: WO 2013/017360

(56) Entgegenhaltungen:
- EP-A1- 2 194 086
- EP-A1- 2 196 487
- WO-A1-2009/112418
- WO-A1-2010/003610
- WO-A1-2010/003611
- WO-A1-2010/063531
- WO-A2-2009/016375
- ROKICKI G ET AL: "Hyperbranched aliphatic polyethers obtained from environmentally benign monomer: glycerol carbonate", GREEN CHEMISTRY, ROYAL SOCIETY OF CHEMISTRY, CAMBRIDGE, GB, Bd. 7, 10. Mai 2005 (2005-05-10), Seiten 529-539, XP002508665, ISSN: 1463-9262, DOI: 10.1039/B501597A

## Beschreibung

Die vorliegende Erfindung betrifft ein Verfahren zur Herstellung von verzweigten Polyethern, diesen verzweigten Polyether selbst sowie deren Verwendung.

Verzweigte Polyetherstrukturen sind prinzipiell aus der wissenschaftlichen Literatur bekannt und werden im Wesentlichen mit Hilfe zweier Verfahrensprinzipien hergestellt.

Zunächst ist es üblich die Alkoxylierung in Gegenwart poly-hydroxyfunktioneller Starter durchzuführen, so dass per se keine linearen Polyetherstrukturen aufgebaut werden können.

Einen Nachteil des ersten Verfahrensprinzips stellt der Aggregatzustand des Starters dar. Bei Funktionalitäten von 3 oder mehr Hydroxygruppen sind die Starter fast ausschließlich fester Natur, die erst bei sehr hohen Temperaturen schmelzen und so in einem entsprechenden Lösungsmittel der Reaktion mit Alkylenoxiden zugänglich gemacht werden. Beispielhaft seien hier die folgenden Schriften US 4,585,858 und US 5,273,772 genannt, die die Alkoxylierung von Succrose, Methylglucosid oder Stärke sowie Polyzuckem in aromatischen Lösungsmitteln wie Toluol oder Xylol beschreiben. Dieses Lösemittel muss, sofern es, wie im beschriebenen Fall, inert gegenüber den Reaktionsbedingungen ist, im Anschluss an die Reaktion entfernt werden, was einen zusätzlichen Verfahrensschritt, die Destillation, erfordert. Dieser Destillationsschritt verlängert die Prozesszeit und zudem sind im technischen Maßstab Vorkehrungen zu treffen, die mit signifikantem finanziellen Invest einhergehen. Des Weiteren ist der Einsatz von Lösungsmitteln unter ökologischen und ökonomischen Bedingungen kritisch zu bewerten. Alternativ werden auch Verfahren beschrieben, bei denen das Lösungsmittel nicht inert ist, sondern mitreagiert. Beispielhaft seien hier die Alkoxylierung von Cellulose mit Polypropylenglykol als Lösungsmittel, U S 3,336,291, sowie die Propoxylierung von Saccharose und Sorbitol in Glycerin, DE 10 2007 052599 genannt. In beiden Fällen erfährt das Lösungsmittel an seinen Hydroxygruppen ebenfalls eine Alkoxylierung. Dies führt zwangsläufig zu einer inhomogenen Produktzusammensetzung, die je nach Anwendungsfall des erhaltenen Produkts negative Einflüsse auf die Anwendungseigenschaften zeigen kann.

Des Weiteren ist es auch üblich mono- oder di-hydroxy-funktionelle Starter einzusetzen, die vor, nach oder während der Umsetzung mit Alkylenoxiden auch mit Verzweigem umgesetzt werden. Unter einem Verzweiger versteht man ein Molekül, welches nach Einreaktion in das Polyethergerüst zwei reaktive Gruppen bereitstellt, an denen ein weiterer Kettenaufbau erfolgen kann.

Als zwei der verbreitetsten Verzweiger sind Glycidol und Hydroxy-funktionelle Oxetane zu nennen. Der Aufbau von allyl-terminierten Polyethem durch den Einsatz von Glycidol wird in den Patentanmeldungen WO 2007/075927 (US2010234518) und WO 2010/003610 (US 2011185947) bzw. WO 2010/003611 (US2011294933) beschrieben, der durch den Einbau von Oxetanen in DE 10 2006 031152 (US 2010240842)und ebenfalls WO 2007/075927.

In der DE 10 2007 043618 (US 2008085980) wird eine basenkatalysierte Addition von Glycidol an Allylalkohol oder Glycerinmonoallylether beschrieben. Die Startverbindung wird durch den Zusatz von NaOH oder Natriummethylat als Katalysator deprotoniert und die entstehenden Nebenprodukte Wasser oder Methanol werden im Vakuum entfernt. Zudem wird die Glycidol-Addition bei Temperaturen kleiner 100°C durchgeführt, um unerwünschte Nebenreaktionen zu vermeiden.

Gesättigte Polyetherstrukturen auf der Basis von Glycidol sind ebenfalls bekannt. EP 0 116 978 (US 07/356,359) beschreibt die Lewis-Säure und Alkalimetallhydroxid katalysierte Polymerisation von Glycidol und Ethylenoxid an polyhydroxy-funktionelle Polyether und JP 60 094126 die Umsetzung von Fettalkoholen mit Ethylenoxid und Glycidol.

Eine weitere Möglichkeit zum Aufbau von verzweigten Polyether-Strukturen stellt der Einsatz von geschützten Startern oder Comonomeren dar. Aufgrund der nötigen komplexen, mehrstufigen Reaktionsfolge, die auch verfahrenstechnisch hohe Investkosten mit sich bringt, sind derartige Verfahren nur von untergeordneter Bedeutung.

Der Einsatz geschützter Starter wird z. B. in EP 0 043 966 oder EP 0 141 253 (US4581470) beschrieben, wo die Alkoxylierung von Ketal-geschützten Alkoholen wie Solketal durchgeführt wird, die nach erfolgter Alkoxylierung an der terminalen OH-Gruppe ggf. verkappt und anschließend mittels Ketal-Spaltung zwei neue OH-Gruppen generiert werden können, die einer weiteren Alkoxylierung zugänglich sind.

Die Copolymerisation geschützter Comonomere, wie z. B. tert-Butylglycidylether zusammen mit Alkylenoxiden führt in erster Instanz zu linearen Polyethern. Diese können nach einer sauer katalysierten Abspaltung der tert-Butyl-Gruppen zu linearen polyhydroxy-funktionellen Polyethern (US 4,003,961, US 4,014,854), die in der Folge weiteren Alkoxylierungen zugänglich gemacht werden können (GB 1 267 259, GB 1 516 195).

In den Patentanmeldungen WO 2010/003610 und WO 2010/003611 wird erstmals neben Glycidol auch der Einsatz von Glycerincarbonat als mögliche Verzweigungskomponente genannt. Zur Polymerisation von Glycerincarbonat wird auf die wissenschaftliche Publikation G. Rokicki et al., Green Chemistry, 2005, 7, 529-539 verwiesen, in der die Homopolymerisation von Glycerincarbonat an polyhydroxy-funktionelle Starter beschrieben wird. Besagtes Verfahren ist auch eingehend in PL 199346 beschrieben.

Die Vorteile, die in einem Einsatz von Glycerincarbonat an Stelle von Glycidol begründet liegen, werden in besagten Schriften nur kurz angerissen und sollen im Folgenden detailliert erläutert werden.

Insbesondere bei der Betrachtung sicherheitsrelevanter und ökotoxikologischer Aspekte werden die Vorteile des Verzweigers Glycerincarbonat deutlich. Glycidol neigt zu spontanen Polymerisationen, die meist unter Zersetzung und Explosion erfolgen und birgt somit ein erhöhtes Gefährdungspotential was insbesondere die Lagerung und Umsetzung im großtechnischen Maßstab betrifft. Diesen Anforderungen muss durch groß angelegte, anlagentechnische Maßnahmen und somit auch finanziellem Invest Rechnung getragen werden.

Zudem basiert die industrielle Herstellung von Glycidol auf umwelt- und ressourcenschädlichen Methoden. So wird Glycidol z. B. durch Dehydrochlorierung von 3-Chlorpropan-1,2-diol gewonnen, was auf Epichlorhydrin als Ausgangskomponente beruht. Zu dessen Herstellungen werden große Mengen giftiger Halogene wie Chlor benötigt und bei der abschließenden Dehydrochlorierung fallen große Mengen an unbrauchbaren Nebenprodukten an. So werden also ausschließlich petrochemische Rohstoffe unwiderruflich verbraucht und große Mengen an unbrauchbaren Nebenprodukten erzeugt, was beides zu einer außergewöhnlichen Belastung unseres Ökosystems beiträgt.

Des Weiteren birgt Glycidol auch ein hohes gesundheitsrelevantes Gefährdungspotential, da es karzinogen ist und zudem bei Augenkontakt zu schweren Augenschäden führen kann.

Glycerincarbonat hingegen ist die unter ökotoxikologischen Gesichtspunkten deutlich vorteilhaftere Verbindung. Es wird großtechnisch aus dem billigen, nachwachsenden Rohstoff Glycerin gewonnen. Glycerin fällt in zunehmendem Maße als Nebenprodukt der Gewinnung von Biodiesel aus Fettsäureestem an. Das Glycerincarbonat kann schließlich durch Umesterung mit Dimethylcarbonat oder Kondensation mit Harnstoff gewonnen werden. Das Glycerincarbonat ist eine stabile, farblose Verbindung die toxikologisch unbedenklich und nicht kennzeichnungspflichtig ist. Zudem ist Glycerincarbonat im Gegensatz zu Glycidol unzersetzt destillierbar, was eine gegebenenfalls nötige Aufreinigung erheblich erleichtert.

Das in WO 2010/003610 und WO 2010/003611 bzw. G. Rokicki et al. beschriebene Verfahren zur Herstellung hyperverzweigter Polyether beschreibt eine sehr langsame und somit zeitintensive Umsetzung von Glycerincarbonat an Polyole, die zudem im Lösungsmittel durchgeführt und somit zu - im betrieblichen Maßstab - nicht wirtschaftlichen Prozessen führt. Die Produkte sind alle frei von Carbonatgruppen.

Die in den genannten Patentanmeldungen beschriebenen Verfahren beschreiben den zuvor bereits diskutierten Schritt der destillativen Trennung des aus der Umsetzung von hydroxyl-funktionellen Startverbindung mit dem Katalysator resultierenden Spaltkomponente was verfahrenstechnisch von Nachteil ist.

Die Aufgabe der vorliegenden Erfindung bestand darin ein alternatives Verfahren zur Herstellung von verzweigten Polyethem bereitzustellen.

Überraschenderweise wurde gefunden, dass verzweigte Polyether auf einfache Weise durch Umsetzung von Glycerincarbonat mit Starter und Epoxid erhalten werden können.

Gegenstand der vorliegenden Erfindung ist deshalb ein Verfahren gemäß Anspruch 1 zur Herstellung von verzweigten Polyethern, welches dadurch gekennzeichnet ist, dass es die folgenden Schritte aufweist:
(a) Umsetzen eines Starters der allgemeinen Formel (II)

   Z(X-H)ⱼ (II)

   mit
   X = unabhängig voneinander O, NH, N-Alkyl, N-Aryl oder S, vorzugsweise O,
   j = 1 bis 10, vorzugsweise 1 bis 5, bevorzugt 1, 2 oder 3,
      und
   Z= beliebiger organischer Rest, wobei jedes X mit einem Kohlenstoffatom des organischen Restes verknüpft ist,
   mit einem oder mehreren zur ringöffnenden Polymerisation geeigneten Edukten, vorzugsweise Epoxid(en),
(b) Umsetzen des in Schritt (a) erhaltenen Reaktionsgemisches mit Glycerincarbonat,
(c) Umsetzen des in Schritt (b) erhaltenen Reaktionsgemisches mit einem oder mehreren zur ringöffnenden Polymerisation geeigneten Edukten, vorzugsweise Epoxid(en).

Ebenfalls Gegenstand der vorliegenden Erfindung sind Verzweigte Polyether gemäß Anspruch 6 der Formel (I)

Z(-X-M1ᵢ₁-M2ᵢ₂-M3ᵢ₃-M4ᵢ₄-M5ᵢ₅-M6ᵢ6-M7ᵢ₇-M8ᵢ₈-M9ᵢ₉-M10ᵢ₁₀-M11ᵢ₁₁-Jᵢ₁₂)ᵢ(-X-J)ₖ (I)

wie noch folgend definiert, sowie Zusammensetzungen die diese Verbindungen enthalten.

Außerdem ist Gegenstand der vorliegenden Erfindung die Verwendung gemäß Anspruch 14 einer Verbindung oder einer Zusammensetzung gemäß zumindest einem der Ansprüche 6 bis 13 als grenzflächenaktive Substanzen, als Additiv für keramische Formulierungen, als Additiv in Beschichtungsmitteln, polymeren Formmassen oder Thermoplasten, als Nahrungsmittelzusatz, als Vemetzer, als Verdicker, als Additiv für Polyurethanverbindungen, bei der Herstellung von Farben, Lacken, Klebstoffen, als Träger von Katalysatoren oder in der biomedizinischen Technik allgemein, oder als Zusatzstoff für kosmetische Formulierungen und Reinigungsmittel.

Das erfindungsgemäße Verfahren hat den Vorteil, dass Verbindungen erhalten werden, in denen die Carbonatstrukturen zumindest teilweise erhalten bleiben. Durch die Carbonatfunktionen und/oder die Verzweigungen können Polyethercarbonate erhalten werden, die trotz des Einbaus größerer Mengen an Ethylenoxid bei Normalbedingungen flüssig sind.

Die Verwendung von Glycerincarbonat als Edukt weist außerdem den Vorteil auf, dass es im Vergleich zu Glycidol nicht toxisch ist und nicht zur Autopolymerisation neigt.

Ein weiterer Vorteil der vorliegenden Erfindung besteht darin, dass auf eine Entfernung der bei der Herstellung der Polyethercarbonate anfallenden Alkohole verzichtet werden kann, ohne Qualitätseinbußen des Endprodukts in Kauf nehmen zu müssen.

Ein Vorteil der erfindungsgemäßen Produkte ist zudem, dass die carbonatgruppenhaltigen Polyethercarbonate stabil sind. In den IR-Spektren vor und nach dreiwöchiger Lagerung bei 60°C waren keinerlei Unterschiede zu erkennen.

Die erfindungsgemäßen Gegenstände werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt, insbesondere in Bezug auf den Sachverhalt, in dessen Zusammenhang das Dokument zitiert wurde, vollständig zum Offenbarungsgehalt der vorliegenden Erfindung gehören. Werden in der vorliegenden Erfindung chemische (Summen-)Formeln verwendet, so können die angegebenen Indizes sowohl absolute Zahlen als auch Mittelwerte darstellen. Bei polymeren Verbindungen stellen die Indizes vorzugsweise Mittelwerte dar. Bei Prozentangaben handelt es sich, wenn nicht anders angegeben, um Angaben in Gewichtsprozent. Sind nachfolgend Messwerte angegeben, so sind diese Messungen, wenn nicht anders angegeben bei Normalbedingungen (25 °C und 1013 mbar) durchgeführt worden. Werden nachfolgend Mittelwerte angegeben, so handelt es sich, wenn nicht anderes angegeben, um Gewichtsmittel.

Wird nachfolgend von Polyethercarbonaten, verzweigten Polyethern bzw. Polyether-ähnlichen Strukturen gesprochen, so werden darunter, wenn nicht anders angegeben, erfindungsgemäße Verbindungen der Formel (I) verstanden. Solche Verbindungen der Formel (I) umfassen z. B. auch Polyether, Polyetherole, Polyetheralkohole und Polyetherester. Dabei ist nicht erforderlich, dass der Ausdruck "Poly" damit einhergehen muss, dass es sich um eine Vielzahl von Etherfunktionalitäten oder Alkoholfunktionalitäten im Molekül oder Polymer handelt. Vielmehr wird dadurch nur angedeutet, dass zumindest Wiederholungseinheiten einzelner Einheiten oder aber Zusammensetzungen vorliegen, die eine höhere Molmasse und zudem auch noch eine gewisse Polydispersität aufweisen. Das Wortfragment "Poly" umfasst im Zusammenhang mit dieser Erfindung nicht nur ausschließlich Verbindungen mit zumindest 3 Wiederholungseinheiten eines oder mehrerer Monomere im Molekül, sondern vorzugsweise auch solche Zusammensetzungen von Verbindungen, die eine Molekulargewichtsverteilung aufweisen und dabei vorzugsweise ein gewichtsmittleres Molekulargewicht von mindestens 200 g/mol besitzen. Bei dieser Definition ist dem Umstand Rechnung getragen, dass es auf dem betrachteten Gebiet der Technik üblich ist, solche Verbindungen bereits als Polymere zu bezeichnen, auch wenn sie nicht einer Polymerdefinition analog OECD- oder REACH-Richtlinien zu genügen scheinen.

Das erfindungsgemäße Verfahren zur Herstellung von verzweigten Polyethern gemäß Anspruch 1, zeichnet sich dadurch aus, dass es die folgenden Schritte aufweist:
(a) Umsetzen eines Starters der allgemeinen Formel (II)

   Z(X-H)ⱼ (II)

   mit
   X = unabhängig voneinander O, NH, N-Alkyl, N-Aryl oder S, vorzugsweise O,
   j = 1 bis 10, vorzugsweise 1 bis 5, bevorzugt 1, 2 oder 3,
      und
   Z = beliebiger organischer Rest, wobei jedes X mit einem Kohlenstoffatom des organischen Restes verknüpft ist,
   mit einem oder mehreren zur ringöffnenden Polymerisation geeigneten Edukten, vorzugsweise Epoxid(en),
(b) Umsetzen des in Schritt (a) erhaltenen Reaktionsgemisches mit Glycerincarbonat,
(c) Umsetzen des in Schritt (b) erhaltenen Reaktionsgemisches mit einem oder mehreren zur ringöffnenden Polymerisation geeigneten Edukten, vorzugsweise Epoxid(en).

Vorzugsweise ist Z ein beliebiger organischer Rest, der gesättigt, ungesättigt oder aromatisch, linear, cyclisch oder verzweigt sein kann und der auch Heteroatome, sowie weitere substituierte, funktionelle, organische, gesättigte oder ungesättigte Reste enthalten kann. Vorzugsweise weist der Rest Z 1 bis 1 500, bevorzugt 2 bis 500, insbesondere 3 bis 30 Kohlenstoffatome auf.

Die mit dem erfindungsgemäßen Verfahren erhaltenen verzweigten Polyether weisen mindestens eine Struktureinheit -O-C(O)-O- auf.

Die Umsetzung in den Schritten (a) und (c) des erfindungsgemäßen Verfahrens ist vorzugsweise eine Alkoxylierung.

Die Schritte (a) bis (c) können in Gegenwart oder in Abwesenheit eines Lösemittels durchgeführt werden. Vorzugsweise werden die Schritte (a) bis (c) lösemittelfrei durchgeführt.

Die Schritte (a) bis (c) des erfindungsgemäßen Verfahrens werden vorzugsweise als Eintopfprozess durchgeführt. Dabei kann es bevorzugt sein, auf eine Entfernung, des bei dem Schritt (a) bei der Verwendung eines Alkalialkoxids entstehenden Alkohols zu verzichten, ohne Qualitätseinbußen des Endprodukts in Kauf nehmen zu müssen.

Selbstverständlich lässt sich das Verfahren auch nach jedem der drei Prozessschritte unterbrechen. Das jeweilige intermediär erhaltene Produkt kann abgefüllt und bis zur weiteren Umsetzung gelagert werden, aber auch in demselben oder einem anderen geeigneten Reaktionsgefäß weiter umgesetzt werden. Die Prozessschritte müssen nicht unmittelbar nach einander durchgeführt werden, jedoch kann sich eine zu lange Lagerungszeit der Zwischenstufe negativ auf die Qualität des Endproduktes auswirken.

Wird als Startverbindung bereits ein Polyether, Polyester oder Polyetherester eingesetzt, so kann gegebenenfalls auf den ersten Verfahrensschritt (a) verzichtet werden bzw. hat der erste Verfahrensschritt bereits stattgefunden.

Es ist möglich die Verfahrenschritte (a) und (b) oder (b) und (c) zu kombinieren. Durch den etwaigen Druckaufbau infolge einer möglichen CO₂-Freisetzung während der Glycerincarbonat-Umsetzung jedoch weniger bevorzugt.

Nach einem ersten Schritt (c) kann emeut ein Schritt (b) und dann wieder ein Schritt (c) und so weiter durchgeführt werden. In den Schritten (a) und (c) eingesetzte, zur ringöffnenden Polymerisation geeigneten Edukte können in den einzelnen Verfahrenschritten als Reinstoffe oder in beliebigen Mischungen eingesetzt werden. Die Reihenfolge der Anlagerungsschritte der verschiedenen Edukte kann beliebig erfolgen, so dass sich sowohl, dem Fachmann als statistische Struktur bekannte, willkürliche Aufbauten des Polyethergerüstes als auch gradientartige oder blockartige Aufbauten resultieren können.

Die in den Schritten (a) und (c) eingesetzten, zur ringöffnenden Polymerisation geeigneten Edukte, können gleich oder unterschiedlich sein. Die zur ringöffnenden Polymerisation eingesetzten Edukte sind ausgewählt aus Alkylanoxiden, Glycidylethern, Lactonen und Cyclischen Säureanhydriden.

Glycerincarbonat soll im Rahmen der vorliegenden Erfindung nicht als zur Gruppe der zur ringöffnenden Polymerisation geeigneten Edukte der Schritte a und c gehören.

Als Alkylenoxide können generell alle dem Fachmann bekannten Alkylenoxide, rein oder in beliebigen Mischungen, eingesetzt werden, die zu den in Formel (I) definierten Einheiten M1, M2 oder M3 führen. Bevorzugt können Ethylenoxid, Propylenoxid, 1,2-Butylenoxid, 2,3-Butylenoxid, Isobutylenoxid, Octen-1-oxid, Decen-1-oxid, Dodecen-1-oxid, Tetradecen-1-oxid, Hexadecen-1-oxid, Octadecen-1-oxid, C20/28-Epoxid (kommerzielle Mischung aus Eicosanol und Octasanol), α-Pinenepoxid, Cyclohexenoxid, 3-Perfluoroalkyl-1,2-Epoxypropan und Styroloxid eingesetzt werden. Besonders bevorzugt werden Ethylenoxid, Propylenoxid, Dodecen-1-oxid und Styroloxid eingesetzt. Ganz besonders bevorzugt werden Ethylenoxid und/oder Propylenoxid eingesetzt, die nach erfolgter Umsetzung zu den in Formel (I) definierten Einheiten M1 bzw. M2 führen.

Als Glycidylether, die nach erfolgter Umsetzung in Formel (I) zu den Momomereinheiten M4 führen, können Alkyl-, Aryl-, Alkaryl- oder Alkoxy-substituierte Glycidylether eingesetzt werden. Der Ausdruck "Alkyl" steht hier vorzugsweise für lineare oder verzweigte Alkyl- oder AlkenylReste mit 1 bis 30, vorzugweise 1 bis 12 und bevorzugt 2 bis 8 Kohlenstoffatomen. Besonders bevorzugt steht der Ausdruck "Alkyl" für einen Methyl-, Ethyl-, Propyl-, Butyl-, tert-Butyl-, 2-Ethylhexyl-, Allyl- oder einen C₁₂-C₁₄-Rest. Der Ausdruck "Aryl" steht vorzugsweise für einen Phenylrest (Phenyl-glycidylether) und der Ausdruck "Alkaryl" steht vorzugsweise für einen o-Kresyl-, p-tert-Butyl-Phenyl oder Benzyl-Rest (o-Kresylglycidylether, p-tert-Butyl-Phenylglycidylether oder Benzylglycidylether). Der Ausdruck "Alkoxy" steht vorzugsweise für Methoxy, Ethoxy, Propoxy, Butoxy und/oder Phenylethoxy und umfasst von 1 bis 30 Alkoxy-Einheiten, die auch eine Kombination von zwei oder mehr unterschiedlichen Alkoxy-Einheiten sein kann. Als Glycidylether können auch polyfunktionelle Glycidylether wie 1,4-Butandioldiglycidylether, 1,6-Hexandioldiglycidylether, Cyclohexandimethanoldiglycidylether, Neopentylglykoldiglycidyl-ether, Polyethylenglykoldiglycidylether, Polypropylenglykoldiglycidylether, Polyglycerin-3-Glycidether, Glycerintriglycidether, Trimethylolpropantriglycidylether oder Pentraerythrittetraglycidylether eingesetzt werden. Der Einsatz derartiger tri- oder tetrafunktionellen Monomere führt auch zum Aufbau verzweigter Strukturelemente.

Um verzweigte Polyethercarbonate mit den Einheiten M10 und M11 aufzubauen, können Polyetherestercopolymere aus Alkylenoxiden und Lactonen und/oder Säureanhydriden in das Polyethercarbonat-Grundgerüst eingebaut werden. Derartige Copolymere sind aus dem Stand der Technik bekannt. Copolymere aus Alkylenoxiden und Lactonen werden in den folgenden Schriften beschrieben, z. B. US 2,962,524, US 3,312,753, US 3,689,531, US 4,291,155, US 5,525,702, US 3,689,531, US 3,795,701, US 2,962,524, EP 2 093 244. Copolymere aus Alkylenoxiden und cyclischen Anhydriden werden z. B. in den folgenden Schriften beschrieben DE 69532462, US 4,171,423, US 3,374,208, US 3,257,477, EP 2 093 244. Alle zuvor genannten Schriften und die in ihr als Stand der Technik zitierten Schriften werden hiermit als Referenz eingeführt und gelten als Teil des Offenbarungsgehaltes der vorliegenden Erfindung.

Die diskutierten Polyetherestercopolymere können nach den in den oben genannten Patenten beschriebenen Verfahren hergestellt werden und als Starter für die Synthese von verzweigten Polyethercarbonaten eingesetzt werde. Prinzipiell ist es jedoch auch möglich das zunächst aus einem beliebigen Startalkohol mit Alkylenoxiden und Glycerincarbonat ein verzweigtes Polyethercarbonat hergestellt wird, welches dann im folgenden nach den in der zuvor zitierten Patentliteratur beschriebenen Umsetzungen zu Polyetherestercopolymeren umgesetzt wird.

Werden als zur ringöffnenden Polymerisation geeignete Edukte Lactone eingesetzt, so werden vorzugsweise solche der Formel (III) eingesetzt. 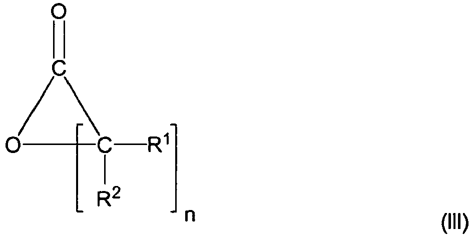 wobei R¹ und R² unabhängig voneinander Wasserstoff, Alkyl-, Alkoxy-, Aryl- oder Aralkylgruppen sein können, sowie n = 3 bis 8, die unter Ringöffnungspolymerisation zu Polyetherestercarbonaten copolymerisiert werden.

Geeignete Lactone sind vorzugsweise ausgewählt aus der Gruppe umfassend γ-Butyrolacton, δ-Valerolacton, ε-Caprolacton, ζ-Enantholacton, η-Caprylolacton, Methyl-ε-caprolacton, Dimethyl-ε-caprolacton, Trimethyl-ε-caprolacton, Ethyl-ε-caprolacton, Isopropyl-ε-caprolacton, n-Butyl-ε-caprolacton, Dodecyl-ε-caprolacton, Methyl-ζ-enantholacton, Methoxy-ε-caprolacton, Dimethoxy-ε-caprolacton und Ethoxy-ε-caprolacton. Bevorzugt werden ε-Caprolacton, Methyl-ε-caprolacton und Trimethyl-ε-caprolacton eingesetzt, besonders bevorzugt ε-Caprolacton.

Werden als Edukte zur ringöffnenden Polymerisation cyclische Anhydride eingesetzt, so werden vorzugsweise solche der Formel (IV) eingesetzt. 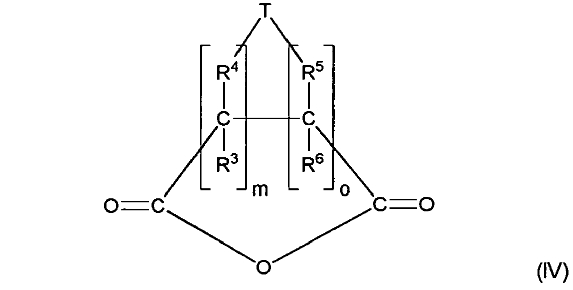 wobei R³, R⁴, R⁵ und R⁶ unabhängig voneinander Wasserstoff und/oder ein organischer Rest, bevorzugt H, Alkyl-, Alkenyl-, Alkyliden, Alkoxy-, Aryl- und/oder Aralkylgruppen sein können, m und o können unabhängig voneinander 1 bis 8 sein, bevorzugt sind m und o gleich 1, gegebenenfalls können R³ und/oder R⁶ auch nicht vorhanden sein, gegebenenfalls können die Reste R³ und R⁶ auch eine Bindung bilden (wenn m = o = 1), sodass eine Doppelbindung entsteht, weiterhin können die Kohlenwasserstoffreste R⁴ und R⁵ cycloaliphatisch oder aromatisch über das Fragment T verbrückt sein, wobei m und o bevorzugt gleich 1 sind, und T kann sowohl einen divalenten Alkylen- als auch Alkenylenrest darstellen, der weiter substituiert sein kann, die Einheiten mit den Indices m und o können beliebig angeordnet sein, weiterhin kann gegebenenfalls ein Rest R³, R⁴, R⁵ oder R⁶ nicht vorhanden sein, z.B. im Falle einer der organischen Reste ein Alkylidenrest ist, ist der jeweilige geminale Rest nicht vorhanden, ist z.B. R³ gleich Methyliden (=CH₂), so ist R⁴ nicht vorhanden. Beispiele für bevorzugte cyclische Anhydride sind Succinanhydrid, Maleinsäureanhydrid, Itaconanhydrid, Glutaranhydrid, Adipinanhydrid, Citraconanhydrid, Phthalsäureanhydrid, Hexahydrophthalsäure-anhydrid und Trimellitanhydrid sowie polyfunktionelle Säureanhydride wie Pyromellit-Dianhydrid, Benzophenon-3,3',4,4'-tetracarbonsäure-Dianhydrid, 1,2,3,4-Butantetracarbonsäuredianhydrid oder radikalisch polymerisierte Homo- oder Copolymerisate von Maleinsäureanhydrid mit Ethylen, Isobutylene, Acrylnitril, Vinylacetat oder Styrol. Besonders bevorzugte Anhydride sind Succinanhydrid, Maleinsäureanhydrid, Itaconanhydrid, Glutaranhydrid, Adipinanhydrid, Citraconanhydrid, Phthalsäureanhydrid, Hexahydrophthalsäure-anhydrid.

Auch bei der Verwendung von Lactonen und/oder cyclischen Säureanhydriden können diese jeweils allein oder in beliebigen Kombinationen eingesetzt werden.

### Schritt (a):

Als Starter können prinzipiell alle Verbindungen, die der allgemeinen Formel (II) entsprechen eingesetzt werden. Insbesondere können Mono-, Di- oder Polyamine, Mono-, Di- oder Polythiole und/oder Mono-, Di- oder Polyalkohole als Starter der Formel (II) eingesetzt werden.

Vorzugsweise werden solche Verbindungen der Formel (II) als Starter eingesetzt, bei denen X = O ist. Es werden vorzugsweise Verbindungen der Formel (II) mit Molmassen von 32 bis 30.000 g/mol, insbesondere 50 bis 2000 g/mol und mit j = 1 bis 8, bevorzugt mit j = 1 bis 5 Hydroxylgruppen eingesetzt. Insbesondere wenn X = O ist, sind solche Starter der Formel (II) bevorzugt, bei denen vorzugsweise j = 1 ist.

Es kann vorteilhaft sein, wenn der in Schritt (a) eingesetzt Starter (II) eine Alkyl-, Aryl- oder Aralkyl-Verbindung mit j = 1 bis 3 ist. Besonders bevorzugt werden als Starter (II) Alkyl-, Aryl- oder Aralkyl-Verbindungen eingesetzt, bei denen j = 1 bis 3 ist und die gegebenenfalls α-hydroxy-funktionell und ω-ungesättigt sind.

Als Beispiele für bevorzugte Verbindungen der Formel (II) mit X = O und j = 1 seien Allylalkohol, 2-Allyloxyethanol, Vinylalkohol, 5-Hexen-1-ol und 10-Undecen-1-ol, Ethanol, Propanol, isoPropanol, Butanol, als auch alle isomeren Pentanole genannt. Eingesetzt werden können auch die entsprechenden Methallyl-Verbindungen, wie z. B. Methallylalkohol oder Methallylpolyalkylenoxide. Wenn im Rahmen dieser Erfindung von allylischen Startverbindungen gesprochen wird, umfasst dieser Begriff auch die methallylischen Analoga, ohne dass dies gesondert angesprochen werden müsste. Wird der Begriff "(meth)allylisch" verwendet, so umfasst dieser ebenfalls "allylisch" wie auch "methallylisch".

Weiterhin können insbesondere auch Starter nachhaltigen Ursprungs, insbesondere neine Fettalkohole eingesetzt werden. Unter Fettalkoholen sind primäre aliphatische Alkohole der Formel (II) zu verstehen, in der Z für einen aliphatischen, linearen oder verzweigten Kohlenwasserstoffrest mit 6 bis 22 Kohlenstoffatomen und 0 und/oder 1, 2 oder 3 Doppelbindungen steht. Typische Beispiele sind Capronalkohol, Önanthalkohol, Caprylalkohol, Pelargon-, Caprinalkohol, 1-Undecanol, Laurylalkohol, 1-Tridecanol, Isotridecylalkohol, Myristylalkohol, 1-Pentadecanol, Cetylalkohol, Palmoleylalkohol, 1-Heptadecanol, Stearylalkohol, Isostearylalkohol, Oleylalkohol, Elaidylalkohol, Petroselinylalkohol, Linolylalkohol, Linolenylalkohol, 1-Nonadecanol, Elaeostearylalkohol, Arachylalkohol, 1-Heneicosanol, Gadoleylalkohol, Behenylalkohol, Erucylalkohol und Brassidylalkohol sowie deren technische Mischungen, die z.B. bei der Hochdruckhydrierung von technischen Methylestern auf Basis von Fetten und Ölen oder Aldehyden aus der Roelen'schen Oxosynthese sowie als Monomerfraktion bei der Dimerisierung von ungesättigten Fettalkoholen anfallen. Neben der Verbindungsklasse der Oxoalkohole, die meist 2 bis 4 Methylgruppen als Verzweigungen tragen, können auch so genannte Guerbetalkohole, die in 2-Stellung mit einer Alkylgruppe verzweigt sind als Startverbindungen eingesetzt werden. Geeignete Guerbetalkohole sind unter anderem 2-Ethylhexanol, 2-Butyloctanol, 2-Hexyldecanol und/oder 2-Octyldodecanol. Zudem können auch industriell hergestellte, primäre aliphatische Alkohole der allgemeinen Formel (II), in der Z für einen aliphatischen, linearen oder verzweigten Kohlenwasserstoffrest mit mehr als 22 Kohlenstoffatomen steht, eingesetzt werden. Beispielhaft sei hier die Produktklasse der UNILIN^{®}-Alkohole genannt, welche langkettige, gesättigte, primäre Alkohole darstellen, die eine mittlere Kettenlänge von bis zu 50 Kohlenstoffatomen aufweisen können. Auch cyclische Startverbindungen die der Formel (II) entsprechen können als Starter eingesetzt werden. Als beispielhafte nicht limitierende Vertreter derartiger Verbindungen lassen sich Cyclopentanol, 1-Methylcyclopentanol, Cyclohexanol, 2-Cyclohexen-1-ol, Cycloheptanol, 1-Methyl-4-isopropenyl-6-cyclohexen-2-ol, Furfurylalkohol, Solketal, 2-Cyclohexen-1-ol, 1-Methyl-4-isopropenyl-6-cyclohexen-2-ol und 5-Norbornen-2-methanol und 5-Norbomen-2-methanol, nennen. Auch jegliche hydroxyfunktionelle, aromatische Startverbindungen wie Benzylalkohol und Phenolderivate, Catechole oder Resorcinole können als Starter eingesetzt werden.

Als geeignete Startverbindungen der Formel (II) können auch Di- oder Polyolverbindungen eingesetzt werden, die zwei (j = 2), drei (j = 3) oder mehr als drei Hydroxylgruppen (j = 4, 5, usw.) tragen. Mit zunehmendem Grad an Funktionalität geht in der Regel eine erhöhte Polydispersität einher, was die physikalischen Eigenschaften der Endprodukte jedoch durchaus auch vorteilhaft beeinflussen kann.

Als Diole (j = 2) können bevorzugt Ethylenglykol, Propylenglykol, Di-, Tri- und Polyethylenglykol, 1,2-Propylenglykol, Di-, Tri- und Polypropylenglykol, Neopentylglykol, 1,4-Butandiol, 1,6-Hexandiol eingesetzt werden.

Bei Verbindungen mit j > 3 handelt es sich vorzugsweise um handelsübliche Zuckeralkohole wie Erythritol, Xylitol und insbesondere die 6-wertigen Reduktionsprodukte der Monosaccharide wie Mannitol und Sorbitol. Aber auch Verbindungen wie Trimethylolpropan, Di(trimethylol)ethan, Di(trimethylol)propan, Trimethylolpropanmonoallylether, Pentaerythrit, Di(pentaerythritol), Glycerin, Di(glycerin, oder Glycerinmonoallylether, Polyglycerin oder auch weitere auf Naturstoffen basierende, Hydroxylgruppen tragende Verbindungen, wie z. B. Cellulosezucker oder Lignin können eingesetzt werden.

Je nach Anforderungen an das Endprodukt kann als Starter eine hochgereinigte Qualität oder die handelsübliche Ware von technischer Reinheit eingesetzt werden.

Als zur ringöffnenden Polymerisation geeignete Edukte können einer oder mehrere der oben genannten Edukte gleichzeitige oder nacheinander eingesetzt werden.

Die Umsetzung erfolgt in dem erfindungsgemäßen Verfahren in Schritt (a) vorzugsweise so, dass zunächst der Starter der Formel (II) durch Alkalimetallhydroxid oder -alkoxid, vorzugsweise Natriummethylat, Kaliummethylat oder Kaliumhydroxid, besonders bevorzugt Natriummethylat oder Kaliumhydroxid, zumindest teilweise deprotoniert wird. Die eingesetzte Menge an Alkalimetallhydroxiden oder -alkoxiden beträgt vorzugsweise von 5 bis 25 mol-%, bevorzugt von 10 bis 20 mol-% bezogen auf die Anzahl der (XH)-Gruppen der eingesetzten Starter.

Die so erhaltene Mischung, die je nach verwendetem Starter vorzugsweise Alkohole und Alkoholate enthält, wird mit zur ringöffnenden Polymerisation geeigneten Edukten, vorzugsweise Alkylenoxiden vorzugsweise bei einer Temperatur zwischen 80°C und 200°C, bevorzugt von 90°C bis 170°C und besonders bevorzugt von 100 bis 125°C umgesetzt. Die Umsetzung erfolgt vorzugsweise bei Drücken im Bereich von 0,001 bis 100 bar, bevorzugt im Bereich von 0,005 bis 10 bar und ganz besonders bevorzugt von 0,01 bis 5 bar (jeweils absolute Drücke).

Werden Lactone oder cyclische Anhydride als zur ringöffnenden Polymerisation geeignete Edukte eingesetzt, kann es vorteilhaft sein, den Verfahrensschritt (a) wie in den Schriften US 2,962,524, US 3,312,753, US 3,689,531, US 4,291,155, US 5,525,702, US 3,689,531, US 3,795,701, US 2,962,524, EP 2 093 244 bzw. DE 69532462, US 4,171,423, US 3,374,208, US 3,257,477, EP 2 093 244 beschrieben, durchzuführen.

Nach der Umsetzung der zur ringöffnenden Polymerisation geeigneten Edukte, vorzugsweise des Alkylenoxids, in Verfahrensschritt (a) kann sich gegebenenfalls ein Desodorierungsschritt anschließen, um Spuren von nicht umgesetzten zur ringöffnenden Polymerisation geeigneten Edukten, vorzugsweise Alkylenoxiden zu entfernen. Bei einem solchen Desodorierungsschritt wird der Reaktor bevorzugt bei der Temperatur des Verfahrenschrittes (a), bevorzugt bis zu einem Vakuum von kleiner oder gleich 100 mbar, besonders bevorzugt bis zu einem Vakuum von kleiner oder gleich 60 mbar und besonders bevorzugt bis zu einem Vakuum von kleiner oder gleich 30 mbar evakuiert.

### Schritt (b):

Das in Schritt (a) erhaltene Reaktionsgemisch wird in Schritt (b) mit Glycerincarbonat umgesetzt. Durch das Glycerincarbonat werden die Einheiten M5 bis M9 in die Verbindungen der Formel (I) eingebracht.

Um zu den verzweigten Strukturen der Formel (I) zu gelangen, wird vorzugsweise mindestens 1 Mol, vorzugsweise mindestens 2 Mol Glycerincarbonat pro Mol (XH)-Gruppen, bevorzugt (OH)-Gruppen des Starters der Formel (II) eingesetzt. Um den Grad der Verzweigung zu begrenzen, hat es sich als vorteilhaft erwiesen, den Gehalt an Glycerincarbonat nach oben hin zu begrenzen. Als idealer Kennwert hat sich hier der prozentuale Molgehalt an Glycerincarbonat, bezogen auf den Molgehalt der Summe aller Edukte (Monomere) aus denen das Polyethercarbonatgerüst unter Missachtung des Moles Startalkohol aufgebaut ist, erwiesen. Dieser Molgehalt sollte vorzugsweise maximal 80 Mol-%, besonders bevorzugt maximal 50 Mol-% und ganz besonders bevorzugt maximal 35 Mol-% betragen.

Die Umsetzung in Schritt (b) erfolgt vorzugsweise als anionische ringöffnende Polymerisation. Auf diese Weise kann der Erhalt gut definierter Strukturen am einfachsten gewährleistet werden.

Zur Umsetzung in Schritt (b) wird der Reaktor (falls nach Verfahrensschritt (a) kein Desodorierungsschritt durchgeführt wurde) bis zu einem Vakuum von kleiner oder gleich 100 mbar, besonders bevorzugt bis zu einem Vakuum von kleiner oder gleich 60 mbar und besonders bevorzugt bis zu einem Vakuum von kleiner oder gleich 30 mbar evakuiert. Dem Reaktionsgemisch im evakuierten Reaktor wird das Glycerincarbonat, vorzugsweise bei einer Temperatur von 120°C bis 220°C, besonders bevorzugt zwischen 140°C und 200°C und ganz besonders bevorzugt bei einer Temperatur zwischen 160°C und 180°C dem Reaktionsgemisch zugeführt.

Durch die Zugabegeschwindigkeit des Glycerincarbonats und die gewählte Reaktionstemperatur lässt sich das Verhältnis von Glycerincarbonat-basierenden Verzweigungseinheiten M5-M8 zu Carbonatestersegmenten M9 regeln. Je schneller die Zugabegeschwindigkeit des Glycerincarbonats und/oder je niedriger die Temperatur, umso höher ist der Gehalt an M9-Einheiten. Die Zugabe des Glycerincarbonats erfolgt mit einer Geschwindigkeit von 0,1 bis 10 mol/h, bevorzugt 0,5 bis 5 mol/h und besonders bevorzugt 1 bis 2,5 mol/h jeweils pro Mol (XH) der eingesetzten Starter.

Die Umsetzung des Glycerincarbonats kann sich teilweise durch die Freisetzung von CO₂ und demzufolge durch einen Druckaufbau im Reaktor bemerkbar machen. Diesem Druckaufbau kann durch kontinuierliches oder periodisches Entspannen entgegengewirkt werden, bevorzugterweise wird hierbei der Druck auf Normaldruck abgesenkt. Die Zugabegeschwindigkeit des Glycerincarbonats wird beim Einsatz von Allylverbindungen vorzugsweise so gewählt, dass der Druck im Reaktor zu keiner Zeit einen Wert von 2 bar Überdruck (barü) überschreitet. Höhere Drücke im Reaktor sollten vermieden werden, da bei hohen Temperaturen und Drücken die Umlagerung von Allyl-Gruppen in nicht mehr hydrosilylierbare Propenyl-Gruppen vermehrt stattfindet und dies einen nicht zu tolerierenden Qualitätsmangel darstellen würde.

Es kann vorteilhaft sein, wenn Schritt (b) so durchgeführt wird, dass sich nach der eigentlichen Reaktion eine Nachreaktion anschließt, bei der das Reaktionsgemisch ohne weitere Zugabe von Glycerincarbonat für eine Dauer von 1 min bis 20 h, bevorzugt 0,1 h bis 10 h und besonders bevorzugt von 1 h bis 5 h ab der letzten Glycerincarbonatzugabe, bei den gleichen Bedingungen Temperatur- und Druckbedingungen wie während der Reaktion (Glycerincarbonatzugabe) gehalten wird.

### Schritt (c):

In Verfahrensschritt (c) erfolgt eine Umsetzung des in Verfahrensschritt (b) erhaltenen Reaktionsgemisches mit zur ringöffnenden Polymerisation geeigneten Edukten. Diese können gleich oder verschieden zu denen in Verfahrensschritt (a) verwendeten Edukten sein. Die Umsetzung erfolgt vorzugsweise unter den für Verfahrensschritt (a) angegebenen Druck- und Temperaturbedingungen. Die zur ringöffnenden Polymerisation eingesetzten Edukte sind ausgewählt aus Alkylanoxiden, Glycidylethern, Lactone und Cyclischen Säureanhydriden.

Die (lebende) anionische ring-öffnende Polymerisation wird in allen drei Verfahrensschritten durch den schnellen Austausch der Protonen zwischen den (XH)- und X⁻-Gruppen, vorzugsweise den Alkohol und Alkoholat-Gruppen, der wachsenden Ketten kontrolliert. Da mit jedem einreagierten Mol Glycerincarbonat eine zusätzliche Hydroxylgruppe generiert wird, sinkt verfahrensbedingt die effektive Konzentration an X⁻-Ionen. Dies hat zur Folge, dass die Reaktionsgeschwindigkeit des Verfahrensschritts (a) langsamer sein kann als die des Verfahrensschnitts (c). Um diesem Effekt Rechnung zu tragen kann es von Vorteil sein, nach dem zweiten Verfahrensschnitt (b) eine erneute Zugabe von Alkalihydroxid oder Alkalialkoxylat (als Katalysator) durchzuführen. Um eine schnellere Umsetzung des Glycerincarbonats zu erzielen, kann selbstverständlich auch nach dem Verfahrensschritt (a) bzw. vor oder während Verfahrensschritt (b) eine erneute Katalysatordosage erfolgen, dies ist jedoch weniger bevorzugt.

Der aus der Reaktion des Katalysators (Alkalihydroxid oder Alkalialkoxylat) mit dem zu deprotonierenden Starter der Formel (II) gebildete niedermolekulare Alkohol (bzw. das Wasser) kann sowohl während des Verfahrensschritts (a) als auch während der Verfahrensschritte (b) und (c) im Vakuum abdestilliert werden. Es ist jedoch besonders bevorzugt den, durch die Katalyse bedingten Alkohol zu keiner Zeit abzudestillieren, da dieser Schritt einen zusätzlichen anlagentechnischen Aufwand und somit auch finanziellen Invest hervorrufen würde. Da zudem die Qualität des Endproduktes durch die Anwesenheit dieser Nebenkomponente(n) in keiner Weise negativ beeinträchtigt wird, wird bevorzugt auf einen solchen Verfahrensschritt verzichtet.

Nach Verfahrensschritt (c), bzw. falls mehrere Verfahrensschritte (c) durchgeführt werden nach dem letzten Verfahrensschritt (c), kann sich ein Neutralisierungsschritt anschließen, bei dem das Alkali z. B. durch den Zusatz von entsprechenden Mengen anorganischer Säuren, wie z. B. Phosphorsäure, oder organischen Säuren, wie z. B. Milchsäure, neutralisiert wird. Eine Behandlung mit einem sauren Ionenaustauscher als Neutralisationsschritt ist ebenfalls möglich jedoch weniger bevorzugt.

Die terminalen Hydroxygruppen der hergestellten verzweigten Polyethercarbonate können frei bleiben oder können teilweise oder komplett modifiziert werden, um die optimale Kompatibilität in der Anwendungsmatrix einstellen zu können. Als Modifikation sind Veresterungen oder Veretherungen ebenso denkbar wie weitere Kondensations- oder Additionsreaktionen mit z. B. Isocyanaten. Als Mono-Isocyanate können Verbindungen wie z. B. n-Butylisocyanat, Cyclohexylisocyanat, Toluylisocyanat, Stearylisocyanat oder Monoaddukte von IPDI oder MDI eingesetzt werden, bevorzugt n-Butylisocyanat, Toluylisocyanat, insbesondere bevorzugt n-Butylisocyanat. Es können auch difunktionelle Isocyanate wie MDI, IPDI oder TDI eingesetzt werden, dies ist jedoch weniger bevorzugt. Auch alle anderen bekannten Modifikationsmöglichkeiten von Hydroxygruppen können angewendet werden. Die terminalen Hydroxygruppen bleiben bevorzugt frei, werden acetyliert, methyliert oder mit Carbonaten endverkappt. Die erwähnten chemischen Umsetzungen müssen dabei nicht quantitativ erfolgen. So können die freien Hydroxygruppen auch nur teilweise chemisch modifiziert sein.

Eine besondere Ausführungsform der Synthese eines verzweigten Polyethercarbonats nach dem in der vorliegenden Anmeldung beanspruchten Verfahren, bei dem an den Starter Allylalkohol zunächst 4 Mole Ethylenoxid, dann 3 Mole Glycerincarbonat und abschließend je 4 Mole Ethylenoxid und Propylenoxid statistisch angelagert werden, kann z. B. zu einer speziellen in Formel (V) dargestellten efindungsgemäßen Verbindung der Formel (I) führen. An der Struktur der Formel (V) ist zu erkennen, dass nur ein Drittel der durch das Glycerincarbonat zur Verfügung gestellten theoretisch möglichen Menge an Einheiten M9 eingebaut wurde. Die anderen zwei Drittel der theoretisch möglichen M9-Einheiten sind als CO₂ bei der Reaktion entwichen.

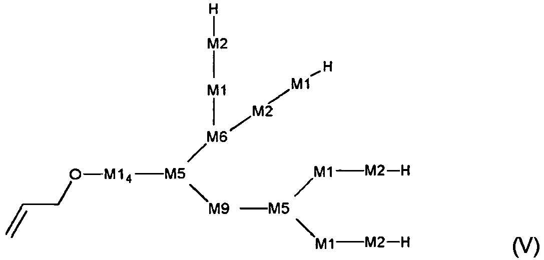

Mit dem erfindungsgemäßen Verfahren können die erfindungsgemäßen Verbindungen der Formel (I) und/oder Zusammensetzungen erhalten werden, die die erfindungsgemäßen Verbindungen der Formel (I) enthalten. Diese Zusammensetzungen können als weitere Komponenten insbesondere Alkaliionen, die aus dem eingesetzten Katalysator stammen können, sowie Kalium- und/oder Natriumsalze einer organischen oder anorganischen Säure, insbesondere Phosphor- oder Milchsäure, aufweisen, die aus einem eventuell durchgeführten Neutralisationsschritt stammen können.

Die efindungsgemäßen verzweigten Polyether gemäß Anspruch 6 zeichnen sich dadurch aus, dass sie der Formel (I)

Z (-X-M1ᵢ₁-M2ᵢ₂-M3ᵢ₃-M4ᵢ₄-M5ᵢ₅-M6ᵢ₆-M7i7-M8ᵢ₈-M9ᵢ₉-M10ᵢ₁₀-M11i₁₁-Jᵢ₁₂)ᵢ (-X-J)ₖ (I)

genügen,
wobei
i = 1 bis 10, vorzugsweise 1 bis 5, bevorzugt 2 bis 3
k = 0 bis 9, vorzugsweise 0 bis 5, bevorzugt 1 bis 3
i + k = 1 bis 10, bevorzugt 1 bis 5, besonders bevorzugt von 2 bis 3
i1 bis i12 = jeweils unabhängig voneinander 0 bis 100 und insbesondere bevorzugt 1 bis 30
X = gleich oder verschieden O, NH, N-Alkyl, N-Aryl oder S,
Z = beliebiger organischer Rest wie für Formel (II) definiert, wobei jedes X mit einem Kohlenstoffatom des organischen Restes verknüpft ist,
J unabhängig voneinander Wasserstoff, ein lineare, cyclischer oder verzweigter, aliphatischer oder aromatischer, gesättigter oder ungesättigter Kohlenwasserstoffrest mit 1 bis zu 30 C-Atomen, ein Carbonsäurerest mit 1 bis 30 Kohlenstoffatomen oder ein mit Heteroatomen substituierter, funktioneller, organischer, gesättigter oder ungesättigter Rest, vorzugsweise ein Wasserstoffatom, ein Methyl- oder ein Acetyl-Rest, 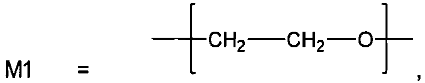 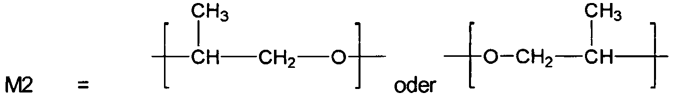 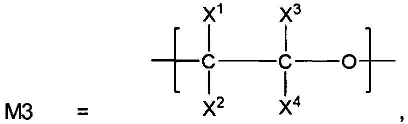
wobei X¹ bis X⁴ unabhängig voneinander Wasserstoff oder lineare, cyclische oder verzweigte, aliphatische oder aromatische, gesättigte oder ungesättigte Kohlenwasserstoffreste mit 1 bis zu 50 C-Atomen, vorzugsweise 2 bis 50 C-Atomen, sind, die gegebenenfalls Halogenatome enthalten können, mit der Maßgabe, dass X¹ bis X⁴ nicht so gewählt sind, dass M3 gleich M1 oder M2 ist, 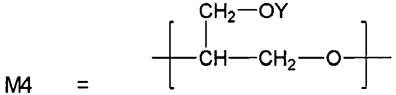 wobei Y unabhängig voneinander ein linearer, cyclischer oder verzweigter, aliphatischer oder aromatischer, gesättigter oder ungesättigter Kohlenwasserstoffrest mit 2 bis zu 30 C-Atomen ist, der auch Heteroatome enthalten kann, 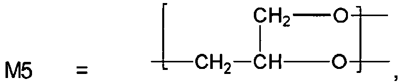 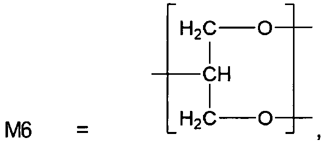 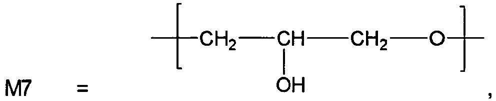 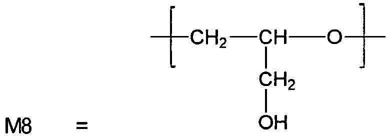 und 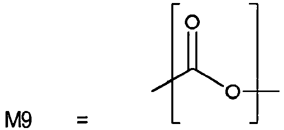 ist 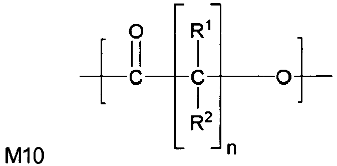 wobei R¹ und R² unabhängig voneinander entweder Wasserstoff, Alkyl-, Alkoxy-, Aryl- oder Aralkylgruppen, vorzugsweise mit 1 bis 15 Kohlenstoffatomen, sind,
sowie n unabhängig von einander 3 bis 8, wobei sowohl n, als auch R¹ und R² in jeder Einheit M10 gleich oder unterschiedlich sein können, 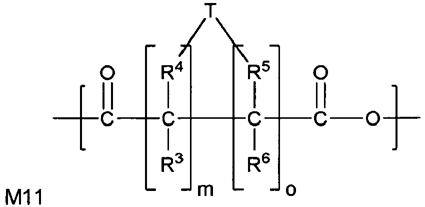 wobei R³, R⁴, R⁵ und R⁶ unabhängig voneinander entweder Wasserstoff, Alkyl-, Alkenyl-, Alkyliden, Alkoxy-, Aryl- oder Aralkylgruppen sind, gegebenenfalls können R³ und/oder R⁶ auch nicht vorhanden sein, gegebenenfalls können die Reste R³ und R⁶ auch eine Bindung bilden (wenn m = o = 1 sind), sodass eine Doppelbindung entsteht, weiterhin können die Reste R⁴ und R⁵ cycloaliphatisch oder aromatisch über das Fragment T verbrückt sein, m und o können unabhängig voneinander 1 bis 8 sein und bevorzugt 1 sind, T einen divalenten Alkylen- oder Alkenylenrest darstellt (m = o = 1) und die Indizes m und o wie auch die Reste T, R³, R⁴, R⁵ und R⁶ in jeder Einheit M11 gleich oder unterschiedlich sein können,
wobei die Einheiten M1 bis M11 in beliebigen Verhältnissen, sowohl blockweise, alternierend oder statistisch angeordnet sein können, als auch einen Verteilungsgradienten aufweisen können und wobei insbesondere die Einheiten M1 bis M4 frei permutierbar sind, mit den Maßgaben, dass i9 0,1 bis 100, bevorzugt von 0,5 bis 50 und besonders bevorzugt von 1 bis 10 ist, dass mindestens eine Einheit M5 oder M6 enthalten ist, bei der sich an keinem Ende direkt ein Rest J und an jedem Ende mindestens eine Einheit ausgewählt aus M1, M2 und M3 anschließt, und dass zwei Einheiten des Typs M9 nicht aufeinander folgen.

Der Rest J in Formel (I) ist vorzugsweise ein Wasserstoffatom, ein Methyl- oder ein Acetyl-Rest.

Die Summe ∑ i5 bis i11 ist vorzugsweise ≥ i + 1, bevorzugt ≥ i + 2. Bevorzugt ist die ∑ i5 + i6 ≥ i + 1, vorzugsweise ≥ i + 2. Die Summe ∑ i1 bis i11 ist vorzugsweise ≥ 5, bevorzugt von 5 bis 500 und besonders bevorzugt von 10 bis 150.

Es kann vorteilhaft sein, wenn die erfindungsgemäßen Verbindungen als Einheiten ausschließlich solche aufweisen, die aus dem Einbau von Ethylenoxid oder Propylenoxid, vorzugsweise Ethylenoxid, als zur ringöffnenden Polymerisation geeigneten Edukten, basieren. Besonders bevorzugt sind i1 und/oder i2 größer 0.

Die Einheiten M9 sind vorzugsweise direkt mit einer Einheit ausgewählt aus M5, M6, M7 oder M8 verknüpft.

Die Anzahl der Reste J in der Verbindung der Formel (I) ist von der Anzahl der Verzweigungen, also der Anzahl der Einheiten M5 und M6 sowie den Indizes i und k abhängig. Der Index i12 ist abhängig von der Anzahl der Einheiten mit dem Index i5 und i6 und genügt vorzugsweise der Bedingung i12 = 1 + (i5 + i6).

Als Substituenten können die Kohlenwasserstoffreste Z bevorzugt Halogene aufweisen. Als Heteroatome können die Kohlenwasserstoffreste Z insbesondere Stickstoff und/oder Sauerstoff, bevorzugt Sauerstoff aufweisen. Besonders bevorzugte Kohlenwasserstoffreste Z weisen keine Substituenten und keine Heteroatome auf und weisen ganz besonders bevorzugt 2 bis 20 Kohlenstoffatome auf.

Die Einheit M1, M2, M10 oder M11, bevorzugt M1 oder M2 bildet vorzugsweise das jeweils letzte Glied einer Einheitenkette.

Die Polydispersität (M_{w}/Mₙ) der erfindungsgemäßen Verbindungen der Formel (I), bestimmt gemäß GPC, beträgt vorzugsweise < 3,5 , bevorzugt < 2,5 und besonders bevorzugt von > 1,05 bis < 1,8.

Die erfindungsgemäßen Verbindungen der Formel (I) weisen mindestens eine verzweigende Generation, bevorzugt mindestens zwei verzweigende Generationen auf. Der Ausdruck "Generation" wird, wie in der WO 2002/040572 (US2004059086), im vorliegenden Fall auch zur Bezeichnung von pseudo-Generationen verwendet. Die entsprechende Definition der WO 2002/040572 ist hiermit vollumfänglich als Bestandteil der Offenbarung der vorliegenden Anmeldung zu verstehen.

Die Carbonat-Segmente (M9) können analytisch mittels ¹³C-NMR- und IR-Spektroskopie nachgewiesen werden. Im ¹³C-NMR sind Signale im Bereich von 155-165 ppm für den Carbonylkohlenstoff des/der Carbonateinheit erkennbar. Im IR lassen sich die C=O-Absorptionen der Carbonatschwingung bei Wellenzahlen im Bereich von 1740-1750 cm⁻¹ und gegebenenfalls 1800-1810 cm⁻¹ erkennen.

Die ¹³C-NMR-Verschiebungen der verzweigten Polyethercarbonate können analog H. Frey et al., Macromolecules 1999, 32, 4240-4260 ausgewertet werden. Die entsprechende Definition aus H. Frey et al. ist hiermit vollumfänglich als Bestandteil der Offenbarung der vorliegenden Anmeldung zu verstehen.

Durch die efindungsgemäßen Verbindungen sind efindungsgemäße Zusammensetzungen erhältlich, die mindestens eine erfindungsgemäße Verbindung der Formel (I) enthalten. Neben den erfindungsgemäßen Verbindungen der Formel (I), sowie den weiteren bereits oben angegebenen optionalen Komponenten, können die erfindungsgemäßen Zusammensetzungen insbesondere Polyether aufweisen, die keine Struktureinheit -O-C(O)-O-aufweisen. Weisen die efindungsgemäßen Zusammensetzungen sowohl efindungsgemäße Verbindungen als auch Polyether auf, die keine Struktureinheit -O-C(O)-O- aufweisen, beträgt der molare Anteil an efindungsgemäßen Verbindungen der Formel (I) zu Polyethem, die keine Struktureinheit -O-C(O)-O- aufweisen, vorzugsweise von 0,001 % bis 70%, bevorzugt von 1 % bis kleiner 50 % bezogen auf die Summe aus erfindungsgemäßen Verbindungen der Formel (I) und Polyethern, die keine Struktureinheit-O-C(O)-O- aufweisen.

Die erfindungsgemäßen Verbindungen sowie die erfindungsgemäßen Zusammensetzungen sind z. B. durch das oben beschriebene efindungsgemäße Verfahren erhältlich bzw. können durch dieses erhalten werden.

Die erfindungsgemäßen Verbindungen der Formel (I) und die erfindungsgemäßen Zusammensetzungen können für vielfältige Anwendungen eingesetzt werden. Aufgrund der hohen Dichte funktioneller Gruppen können sie für alle Anwendungen eingesetzt werden, bei denen assoziative Wechselwirkungen von Bedeutung sind. Beispielhaft sei die mögliche H-Brückenbindung der terminalen OH-Gruppen der verzweigten Strukturen genannt.

Die erfindungsgemäßen Verbindungen oder die erfindungsgemäßen Zusammensetzungen können z. B. als Additiv für keramische Formulierungen, als Additiv in Beschichtungsmitteln, polymeren Formmassen oder Thermoplasten, als Nahrungsmittelzusatz, als Vernetzer und als Additiv für Polyurethanverbindungen, bei der Herstellung von Farben, Lacken, Klebstoffen, als Träger von Katalysatoren oder in der biomedizinischen Technik allgemein verwendet werden.

Des Weiteren können die erfindungsgemäßen Verbindungen oder die erfindungsgemäßen Zusammensetzungen als grenzflächenaktive Substanzen eingesetzt werden, wie z. B. als nicht-ionische Tenside, Emulgatoren oder Netzmittel. Auch ein Einsatz als Gleitmittel oder Gleitadditiv ist denkbar. Als Additiv zur Beeinflussung der Viskosität von Formulierungen ist ein Einsatz als Verdicker ebenfalls möglich. Eine Verwendung als Zusatzstoff für kosmetische Formulierungen und Reinigungsmittel ist ebenfalls möglich.

### Figuren:

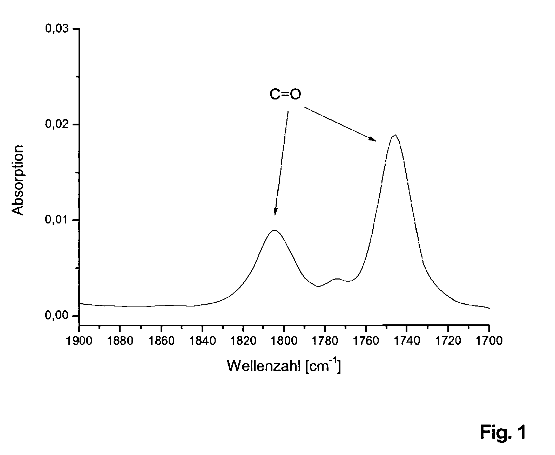

An Hand von Fig. 1 wird die vorliegende Erfindung näher erläutert ohne dass die Erfindung auf die dort gezeigte Ausführungsform beschränkt sein soll.

In Fig. 1 ist das IR-Spektrum des gemäß Beispiel 1 hergestellten, verzeigten Polyethercarbonats dargestellt. Die Banden bei Wellenzahlen von ca. 1745 und 1805 sind den CO-Einheiten (M9) zuzuordnen.

### Messmethoden:

Zur Bestimmung von Parametern oder Messwerten werden vorzugsweise die nachfolgend beschriebenen Methoden verwendet. Insbesondere wurden diese Methoden in den Beispielen des vorliegenden Schutzrechts verwendet.

Die Gehalte an Verzweigungen können beispielsweise durch NMR-Analyse oder MALDI-Tof-Analysen nachgewiesen werden.

Die NMR-Spektren wurden mit einem 400 MHz Spektrometer der Firma Bruker unter Einsatz eines 5 mm QMP-Kopfes gemessen. Es wurden quantitative NMR-Spektren in Gegenwart eines geeigneten Beschleunigungsagenzes gemessen. Die zu untersuchende Probe wurde in einem geeigneten deuterierten Lösungsmittel (Methanol, Chloroform) gelöst und in 5 mm oder ggf. 10 mm NMR-Röhrchen überführt.

MALDI-Tof-Analysen wurden mit einem Shimadzu Biotech Axima^{®} (CFR 2.8.420081127) Gerät im Mode "Reflectron" durchgeführt. Die "Pulse Extraction" war optimiert auf ein Molgewicht von 1 000 g/mol. Die Probe wurde in Chloroform (4-5 g/L) gelöst und 2 µL dieser Lösung auf Graphit als Matrix aufgetragen.

Die Carbonat-Segmente (M9) lassen sich durch ¹³C-NMR-Analysen oder vorzugsweise IR-Spektroskopisch nachweisen. Bei der IR-Spektroskopie können die M9-Einheiten durch Banden bei Wellenzahlen von ca. 1745 und ggf. ca. 1805 nachgewiesen werden.

Die IR-Analysen wurden mit dem IR-Spektrometer Tensor^{®} 27 der Firma Bruker Optics nach dem "Abandoned total reflection"-Verfahren auf einem Diamant gemessen. Die Auflösung betrug 4 cm⁻¹ und es wurden 32 sample scans durchgeführt.

Gewichtsmittlere und zahlenmittlere Molekulargewichte werden im Rahmen dieser Erfindung für die hergestellten Polyethercarbonate kalibriert gegen einen Polypropylenglykolstandard (76-6000 g/mol) durch Gelpermeationschromatographie (GPC) bestimmt. Die GPC wurde durchgeführt auf einem Agilent^{®} 1100 ausgestattet mit einem RI-Detektor und einer SDV 1000/10000 A Säulenkombination bestehend aus einer 0,8 cm x 5 cm Vorsäule und zwei 0,8 cm x 30 cm Hauptsäulen bei einer Temperatur von 30°C und einer Fließrate von 1 mL/min (mobile Phase: THF). Die Probenkonzentration betrug 10 g/L und das Injektionsvolumen 20 µL.

Die nasschemische Analytik wurde in Anlehnung an internationale Standardmethoden durchgeführt: Iodzahl (IZ; DGF C-V 11 a (53); Säurezahl (SZ; DGF C-V 2); OH-Zahl (ASTM D 4274 C).

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

### Beispiel 1: Herstellung eines ungesättigten, verzweigten, rein EO-haltigen Polyethercarbonats

In einem 5 Liter Autoklaven wurden 138 g Allylalkohol und 12,9 g Natriummethylat unter Stickstoff vorgelegt und bis auf einen Innendruck von 30 mbar evakuiert. Unter Rühren wurde das Reaktionsgemisch auf 115°C aufgeheizt und bei dieser Temperatur wurden 691 g Ethylenoxid (EO) angelagert. Nach quantitativem Umsatz des EO wurde der Reaktorinhalt durch Evakuierung auf 30 mbar desodoriert, um eventuell vorhandene Spuren von nicht umgesetztem EO zu entfernen. Anschließend wurde die Temperatur auf 170°C erhöht und über einen Zeitraum von 2 h wurden 622 g Glycerincarbonat kontinuierlich zudosiert. Nach einer ca. zweistündigen Nachreaktion wurde das Reaktionsgemisch auf 115°C abgekühlt und es wurden weitere 1009 g EO angelagert. Nach einer einstündigen Nachreaktion wurde das Gemisch desodoriert und mit 25%iger Phosphorsäure neutralisiert. Das erhaltene verzweigte Polyethercarbonat wies eine OH-Zahl von 183,1 mg KOH/g und eine IZ von 24,2 mg I₂/100 g auf. Laut GPC betrugen Mₚ = 444 g/mol, M_{w} = 776 g/mol, Mₙ = 507 g/mol und M_{w/}Mₙ = 1,5.

### Beispiel 2: Herstellung eines ungesättigten, stärker verzweigten, rein EO-haltigen Polyethercarbonats

In einem 5 Liter Autoklaven wurden 119,6 g Allylalkohol und 11,1 g Natriummethylat unter Stickstoff vorgelegt und bis auf einen Innendruck von 30 mbar evakuiert. Unter Rühren wurde das Reaktionsgemisch auf 115°C aufgeheizt und bei dieser Temperatur wurden 599,5 g EO angelagert. Nach quantitativem Umsatz des EO wurde der Reaktorinhalt durch Evakuierung auf 30 mbar desodoriert, um eventuell vorhandene Spuren von nicht umgesetztem EO zu entfernen. Anschließend wurde die Temperatur auf 170°C erhöht und über einen Zeitraum von 2 h wurden 1071 g Glycerincarbonat kontinuierlich zudosiert. Nach einer ca. dreistündigen Nachreaktion wurde das Reaktionsgemisch auf 115°C abgekühlt und es wurden weitere 1434 g EO angelagert. Nach einer einstündigen Nachreaktion wurde das Gemisch desodoriert und mit 25%iger Phosphorsäure neutralisiert. Das erhaltene verzweigte Polyethercarbonat wies eine OH-Zahl von 205,3 mg KOH/g und eine IZ von 16,8 mg I₂/100 g auf. Laut GPC betrugen Mₚ = 456 g/mol, M_{w} = 885 g/mol, Mₙ = 545 g/mol und M_{w}/Mₙ = 1,62.

### Beispiel 3: Herstellung eines ungesättigten, verzweigten, EO- und PO-haltigen Polyethercarbonats

In einem 5 Liter Autoklaven wurden 116,9 g Allylalkohol und 10,9 g Natriummethylat unter Stickstoff vorgelegt und bis auf einen Innendruck von 30 mbar evakuiert. Unter Rühren wurde das Reaktionsgemisch auf 115°C aufgeheizt und bei dieser Temperatur wurden 585,9 g Ethylenoxid angelagert. Nach quantitativem Umsatz des EO wird der Reaktorinhalt durch Evakuierung auf 30 mbar desodoriert, um eventuell vorhandene Spuren von nicht umgesetztem EO zu entfernen. Anschließend wurde die Temperatur auf 170°C erhöht und über einen Zeitraum von 2 h wurden 526,8 g Glycerincarbonat kontinuierlich zudosiert. Nach einer ca. zweieinhalbstündigen Nachreaktion wurde das Reaktionsgemisch auf 115°C abgekühlt und es wurden 1157,3 g Propylenoxid (PO) angelagert. Nach einer einstündigen Nachreaktion wurde das Gemisch desodoriert und mit 25%iger Phosphorsäure neutralisiert. Das erhaltene verzweigte Polyethercarbonat wies eine OH-Zahl von 175,7 mg KOH/g und eine IZ von 21,5 mg I₂/100 g auf. Laut GPC betrugen Mₚ = 517 g/mol, M_{w} = 875 g/mol, Mₙ = 579 g/mol und M_{w}/Mₙ = 1,5.

### Beispiel 4: Herstellung eines gesättigten verzweigten EO-haltigen Polyethercarbonats

In einem 5 Liter Autoklaven wurden 92,8 g Butanol und 13,2 g Kaliummethylat unter Stickstoff vorgelegt und bis auf einen Innendruck von 30 mbar evakuiert. Unter Rühren wurde das Reaktionsgemisch auf 115°C aufgeheizt und bei dieser Temperatur wurden 331 g Ethylenoxid angelagert. Nach quantitativem Umsatz des EO wurde der Reaktorinhalt durch Evakuierung auf 30 mbar desodoriert, um eventuell vorhandene Spuren von nicht umgesetztem EO zu entfernen. Anschließend wurde die Temperatur auf 170°C erhöht und über einen Zeitraum von 2 h werden 443 g Glycerincarbonat kontinuierlich zudosiert. Nach einer ca. zweistündigen Nachreaktion wurden ebenfalls bei 170°C 662 g EO angelagert. Nach einer einstündigen Nachreaktion wurde erneut desodoriert und weitere 295 g Glycerincarbonat über einen Zeitraum von 2 h zudosiert. Nach einer dreistündigen Nachreaktion wurden abschließend 662 g EO angelagert und nach einer einstündigen Nachreaktion wurde das Gemisch desodoriert und mit 25%iger Phosphorsäure neutralisiert. Das erhaltene verzweigte Polyethercarbonat wies eine OH-Zahl von 182,9 mg KOH/g auf. Laut GPC betragen Mₚ = 529 g/mol, M_{w} = 1068 g/mol, Mₙ = 506 g/mol und M_{w}/Mₙ = 2,1.

### Beispiel 5: Herstellung eines gesättigten verzweigten EO-haltigen Polyethercarbonats

In einem 5 Liter Autoklaven wurden 119 g Diethylenglykol und 9,4 g Kaliumhydroxid unter Stickstoff vorgelegt und bis auf einen Innendruck von 30 mbar evakuiert. Unter Rühren wurde das Reaktionsgemisch auf 115°C aufgeheizt und bei dieser Temperatur wurden 566 g Ethylenoxid angelagert. Nach quantitativem Umsatz des EO wurde der Reaktorinhalt durch Evakuierung auf 30 mbar desodoriert, um eventuell vorhandene Spuren von nicht umgesetztem EO zu entfernen. Anschließend wurde die Temperatur auf 170°C erhöht und über einen Zeitraum von 2 h werden 596 g Glycerincarbonat kontinuierlich zudosiert. Nach einer ca. zweieinhalbstündigen Nachreaktion wurden ebenfalls bei 170°C 1224 g EO angelagert. Nach einer einstündigen Nachreaktion wurde erneut desodoriert und mit 25%iger Phosphorsäure neutralisiert. Das erhaltene verzweigte Polyethercarbonat wies eine OH-Zahl von 176 mg KOH/g auf. Laut GPC betragen Mₚ = 753 g/mol, M_{w} = 1099 g/mol, Mₙ = 649 g/mol und M_{w}/Mₙ = 1,69.

## Patentansprüche

1. Verfahren zur Herstellung von verzweigten Polyethem, **dadurch gekennzeichnet, dass** es die folgenden Schritte aufweist:
(a) Umsetzen eines Starters der allgemeinen Formel (II)
Z(X-H)ⱼ (II)
mit
X = unabhängig voneinander O, NH, N-Alkyl, N-Aryl oder S,
j = 1-10,
und
Z = beliebiger organischer Rest, wobei jedes X mit einem Kohlenstoffatom des organischen Restes verknüpft ist,
mit einem oder mehreren zur ringöffnenden Polymerisation geeigneten Edukten, ausgewählt aus Alkylenoxiden, Glycidylethern, Lactonen und cyclischen Säureanhydride vorzugsweise Epoxid(en),
(b) Umsetzen des in Schritt (a) erhaltenen Reaktionsgemisches mit Glycerincarbonat, wobei die Zugabe des Glycerincarbonats mit einer Geschwindigkeit von 0,1 bis 10 mol/h, jeweils pro Mol (XH) der eingesetzten Starter, erfolgt,
(c) Umsetzen des in Schritt (b) erhaltenen Reaktionsgemisches mit einem oder mehreren zur **dadurch gekennzeichnet, dass** die verzweigten Polyether mindestens eine Struktureinheit -0-C(O)-O- aufweisen.

2. Verfahren nach Anspruch 1, **dadurch gekennzeichnet, dass** die Zugabe des Glycerincarbonats mit einer Geschwindigkeit von 0,5 bis 5 mol/h, bevorzugt 1 bis 2,5 mol/h, jeweils pro Mol (XH) der eingesetzten Starter erfolgt.

3. Verfahren nach einem der Ansprüche 1 oder 2, **dadurch gekennzeichnet, dass** die Umsetzung in den Schritten (a) und (c) eine Alkoxylierung ist.

4. Verfahren nach mindestens einem der Ansprüche 1 bis 3, **dadurch gekennzeichnet, dass** der Starter (II) eine gesättigte oder ungesättigte Alkyl-, eine Aryl- oder eine Aralkyl-Verbindung mit j = 1 bis 3 ist.

5. Verfahren nach Anspruch 4, **dadurch gekennzeichnet, dass** der Starter (II) eine gesättigte oder ungesättigte Alkyl-, eine Aryl- oder eine Aralkyl-Verbindung mit X = O und j = 1 bis 3 ist.

6. Verzweigte Polyether der Formel (I)
Z(-X-M1ᵢ₁-M2ᵢ₂-M3ᵢ₃-M4ᵢ₄-M5ᵢ₅-M6ᵢ₆-M7ᵢ₇-M8ᵢ₈-M9ᵢ₉-M10ᵢ₁₀-M11ᵢ₁₁-Jᵢ₁₂)i(-X-J)ₖ (I)
wobei
i = 1 bis 10, vorzugsweise 1 bis 5, bevorzugt 1, 2 oder 3
k = 0 bis 9, vorzugsweise 0 bis 5, bevorzugt 1 bis 3
i + k = 1 bis 10, bevorzugt 1 bis 5, besonders bevorzugt von 2 bis 3
i1 bis i12 = jeweils unabhängig voneinander 0 bis 100 und bevorzugt 1 bis 30
X = gleich oder verschieden O, NH, N-Alkyl, N-Aryl oder S,
Z = beliebiger organischer Rest, wobei jedes X mit einem Kohlenstoffatom des organischen Restes verknüpft ist,
J unabhängig voneinander Wasserstoff, ein linearer, cyclischer oder verzweigter, aliphatischer oder aromatischer, gesättigter oder ungesättigter Kohlenwasserstoffrest mit 1 bis zu 30 C-Atomen, ein Carbonsäurerest mit 1 bis 30 Kohlenstoffatomen oder ein mit Heteroatomen substituierter, funktioneller, organischer, gesättigter oder ungesättigter Rest, 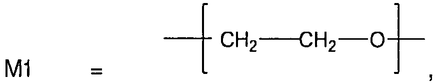 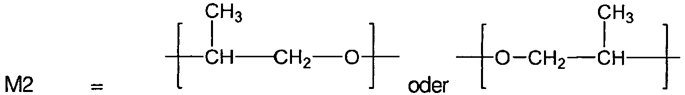 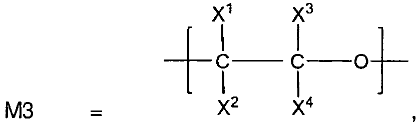
wobei in M3 X¹ bis X⁴ unabhängig voneinander Wasserstoff oder lineare, cyclische oder verzweigte, aliphatische oder aromatische, gesättigte oder ungesättigte Kohlenwasserstoffreste mit 1 bis zu 50 C-Atomen, vorzugsweise 2 bis 50 C-Atomen, sind, die gegebenenfalls Halogenatome enthalten können, mit der Maßgabe, dass X¹ bis X⁴ nicht so gewählt sind, dass M3 gleich M1 oder M2 ist, 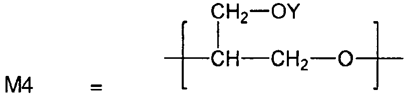 wobei Y unabhängig voneinander ein linearer, cyclischer oder verzweigter, aliphatischer oder aromatischer, gesättigter oder ungesättigter Kohlenwasserstoffrest mit 2 bis zu 30 C-Atomen ist, der auch Heteroatome enthalten kann, 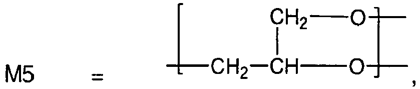 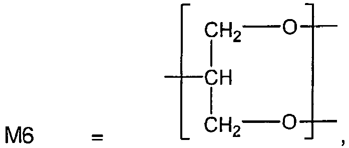 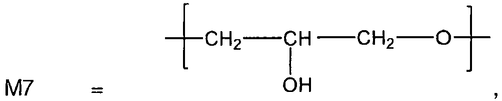 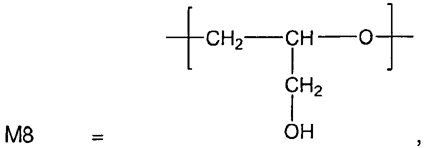 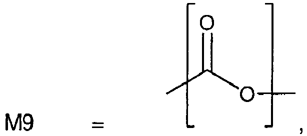 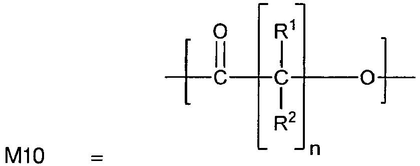 wobei R1 und R2 unabhängig voneinander entweder Wasserstoff, Alkyl-, Alkoxy-, Aryl- oder Aralkylgruppen, vorzugsweise mit 1 bis 15 Kohlenstoffatomen, sind,
sowie n unabhängig voneinander 3 bis 8, wobei sowohl n, als auch R¹ und R² in jeder Einheit M10 gleich oder unterschiedlich sein können, 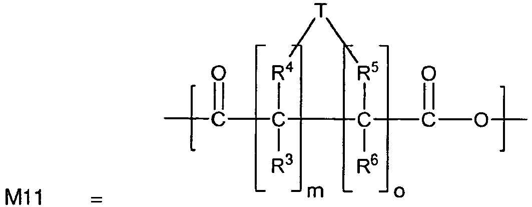 wobei R³, R⁴, R⁵ und R⁶ unabhängig voneinander Wasserstoff und/oder ein organischer Rest, bevorzugt H, Alkyl-, Alkenyl-, Alkyliden, Alkoxy-, Aryl- und/oder Aralkylgruppen sein können, m und o sind unabhängig voneinander 1 bis 8, gegebenenfalls können R³ und/oder R⁶ auch nicht vorhanden sein, gegebenenfalls können die Reste R³ und R⁵ auch eine Bindung bilden (wenn m =o= 1 sind), sodass eine Doppelbindung entsteht, weiterhin können die Kohlenwasserstoffreste R⁴ und R⁵ cycloaliphatisch oder aromatisch über das Fragment T verbrückt sein (bevorzugt sind m und o dann gleich 1) und T kann sowohl einen divalenten Alkylen- als auch Alkenylenrest darstellen, der weiter substituiert sein kann,
und wobei die Indizes m und o sowie die Reste T, R³, R⁴, R⁵ und R⁶ in jeder Einheit M11 gleich oder unterschiedlich sein können,
wobei die Einheit M1 bis M11 in beliebigen Verhältnissen, sowohl blockweise, alternierend oder statistisch angeordnet sein können, als auch einen Verteilungsgradienten aufweisen können und wobei insbesondere die Einheit M1 bis M4 frei permutierbar sind, mit den Maßgaben, dass i9 von 0,1 bis 100 ist, dass mindestens eine Einheit M5 oder M6 enthalten ist, bei der sich an keinem Ende direkt ein Rest J und an jedem Ende mindestens eine Einheit ausgewählt aus M1, M2 und M3 anschließt, und dass zwei Einheiten des Typs M9 nicht aufeinander folgen,

7. Verbindung nach Anspruch 6, **dadurch gekennzeichnet, dass** der Rest J in Formel (I) ein Wasserstoffatom, einen Methyl- oder Acetyl-Rest ist.

8. Verbindung nach Anspruch 6 oder 7, **dadurch gekennzeichnet, dass** die Summe ∑ i5 bis i9 ≥ i + 1 ist.

9. Verbindung nach mindestens einem der Ansprüche 6 bis 8, **dadurch gekennzeichnet, dass** i1 größer 0 ist und i2, i3 und i4 gleich 0 sind.

10. Verbindung gemäß mindestens einem der Ansprüche 6 bis 9, **dadurch gekennzeichnet, dass** ∑ i5+i6 ≥ i+1 ist.

11. Verbindung gemäß einem der Ansprüche 6 bis 10, **dadurch gekennzeichnet, dass** die Einheit M9 direkt mit einer Einheit ausgewählt aus M5, M6, M7 oder M8 verknüpft ist.

12. Zusammensetzung enthaltend eine Verbindung gemäß zumindest einem der Ansprüche 6 bis 11.

13. Verbindung gemäß einem der Ansprüche 6 bis 11 oder Zusammensetzung gemäß Anspruch 12, erhältlich nach zumindest einem der Verfahren gemäß zumindest einem der Ansprüche 1 bis 5.

14. Verwendung einer Verbindung oder einer Zusammensetzung gemäß zumindest einem der Ansprüche 6 bis 13 als grenzflächenaktive Substanzen, als Additiv für keramische Formulierungen, als Additiv in Beschichtungsmitteln, polymeren Formmassen oder Thermoplasten, als Nahrungsmittelzusatz, als Vernetzer, als Verdicker, als Additiv für Polyurethanverbindungen, bei der Herstellung von Farben, Klebstoffen, als Träger von Katalysatoren oder in der biomedizinischen Technik allgemein, oder als Zusatzstoff für kosmetische Formulierungen und Reinigungsmittel.

## Claims

1. Process for preparing branched polyethers, **characterized in that** it has the following steps:
(a) reaction of a starter of the general formula (II)
Z(X-H)ⱼ (II)
where
X = independently at each occurrence O, NH, N-alkyl, N-aryl or S,
j = 1-10,
and
Z = any organic radical, with each X being linked to a carbon atom of the organic radical,
with one or more reactants suitable for ring-opening polymerization, selected from alkylene oxides, glycidyl ethers, lactones and cyclic acid anhydrides, preferably epoxide(s),
(b) reaction of the reaction mixture obtained in step (a) with glycerol carbonate, wherein the addition of the glycerol carbonate is effected at a rate of 0.1 to 10 mol/h, in each case per mole of (XH) in the starters used,
(c) reaction of the reaction mixture obtained in step (b) with one or more for **characterized in that** the branched polyethers have at least one structural unit -O-C(O)-O-.

2. Process according to Claim 1, **characterized in that** the addition of the glycerol carbonate is effected at a rate of 0.5 to 5 mol/h, preferably 1 to 2.5 mol/h, in each case per mole of (XH) in the starters used.

3. Process according to either of Claims 1 and 2, **characterized in that** the reaction in steps (a) and (c) is an alkoxylation.

4. Process according to at least one of Claims 1 to 3, **characterized in that** the starter (II) is a saturated or unsaturated alkyl compound, an aryl compound or an aralkyl compound with j = 1 to 3.

5. Process according to Claim 4, **characterized in that** the starter (II) is a saturated or unsaturated alkyl compound, an aryl compound or an aralkyl compound with X = O and j = 1 to 3.

6. Branched polyethers of the formula (I)
Z (-X-M1ᵢ₁-M2ᵢ₂-M3ᵢ₃-M4ᵢ₄-M5ᵢ₅-M6ᵢ₆-M7ᵢ₇-M8ᵢ₈-M9ᵢ₉-M10ᵢ₁₀-m11ᵢ₁₁-Ji₁₂)ᵢ (-X-J)ₖ (I)
where
i = 1 to 10, preferably 1 to 5, more preferably 1, 2 or 3,
k = 0 to 9, preferably 0 to 5, more preferably 1 to 3,
i + k = 1 to 10, preferably 1 to 5, more preferably from 2 to 3,
i1 to i12 = each independently of one another 0 to 100 and preferably 1 to 30,
X = identically or differently O, NH, N-alkyl, N-aryl or S,
Z = any desired organic radical, with each X being linked to a carbon atom of the organic radical,
J = independently at each occurrence hydrogen, a linear, cyclic or branched, aliphatic or aromatic, saturated or unsaturated hydrocarbon radical having 1 up to 30 C atoms, a carboxylic acid radical having 1 to 30 carbon atoms, or a functional, organic, saturated or unsaturated radical substituted by heteroatoms, 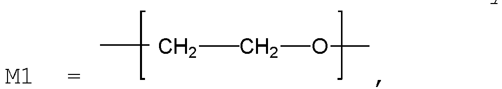 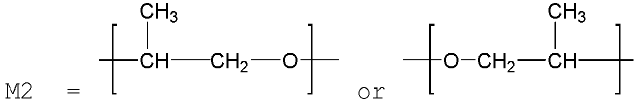 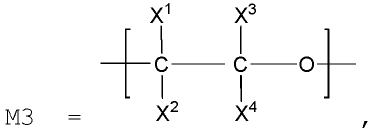
where in M3 X¹ to X⁴ independently of one another are hydrogen or linear, cyclic or branched, aliphatic or aromatic, saturated or unsaturated hydrocarbon radicals having 1 up to 50 C atoms, preferably 2 to 50 C atoms, and may optionally contain halogen atoms, with the proviso that X¹ to X⁴ are not selected such that M3 is the same as M1 or M2, 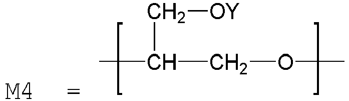 where Y independently at each occurrence is a linear, cyclic or branched, aliphatic or aromatic, saturated or unsaturated hydrocarbon radical having 2 up to 30 C atoms, and may also contain heteroatoms, 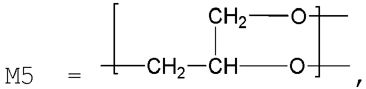 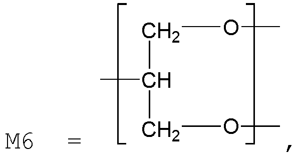 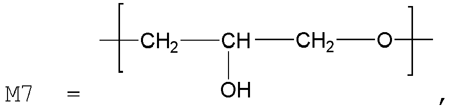 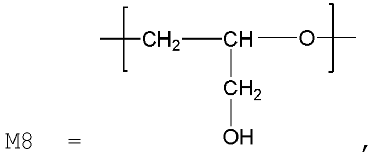 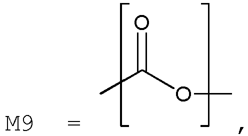 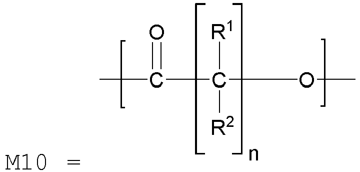 where R1 and R2 independently of one another are either hydrogen or alkyl, alkoxy, aryl or aralkyl groups, preferably having 1 to 15 carbon atoms, and
n independently at each occurrence is 3 to 8, and not only n but also R¹ and R² in each unit M10 may be identical or different, 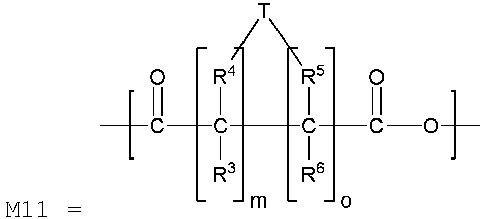 where R³, R⁴, R⁵ and R⁶ independently of one another may be hydrogen and/or an organic radical, preferably H, alkyl, alkenyl, alkylidene, alkoxy, aryl and/or aralkyl groups, m and o independently of one another are 1 to 8, R³ and/or R⁶ may also optionally not be present, the radicals R³ and R⁶ may also optionally form a bond (if m = o = 1), to form a double bond, additionally the hydrocarbon radicals R⁴ and R⁵ may be bridged cycloaliphatically or aromatically via the fragment T (preferably in that case m and o are 1), and T may represent either a divalent alkylene or alkenylene radical, which may be substituted further,
and where the indices m and o and also the radicals T, R³, R⁴, R⁵ and R⁶ in each unit M11 may be identical or different,
where the unit M1 to M11 may be arranged in any proportions, and blockwise, in alternation or at random, and may also have a distribution gradient, and where the unit M1 to M4 in particular are freely permutable, with the provisos that i9 is from 0.1 to 100, that at least one unit M5 or M6 is present and is adjoined at no end directly by a radical J and at each end by at least one unit selected from M1, M2 and M3, and that two units of the type M9 do not follow one another,

7. Compound according to Claim 6, **characterized in that** the radical J in formula (I) is a hydrogen atom or a methyl or acetyl radical.

8. Compound according to Claim 6 or 7, **characterized in that** the sum total ∑ i5 to i9 is ≥ i + 1.

9. Compound according to at least one of Claims 6 to 8, **characterized in that** i1 is greater than 0 and i2, i3 and i4 are 0.

10. Compound according to at least one of Claims 6 to 9, **characterized in that** ∑ i5 + i6 is ≥ i + 1.

11. Compound according to any of Claims 6 to 10, **characterized in that** the unit M9 is linked directly to a unit selected from M5, M6, M7 or M8.

12. Composition comprising a compound according to at least one of Claims 6 to 11.

13. Compound according to any of Claims 6 to 11 or composition according to Claim 12, obtainable by at least one of the processes according to at least one of Claims 1 to 5.

14. Use of a compound or of a composition according to at least one of Claims 6 to 13 as surface-active substance, as additive for ceramic formulations, as additive in coating materials, polymeric moulding compounds or thermoplastics, as food additive, as crosslinker, as thickener, as additive for polyurethane compounds, in the production of paints, inks or adhesives, as support of catalysts, or in biomedicine generally, or as adjuvant for cosmetic formulations and cleaning compositions.

## Revendications

1. Procédé de préparation de polyéthers ramifiés, **caractérisé en ce qu'**il comprend les étapes suivantes :
(a) réaction d'une substance de départ de formule générale (II)
Z(X-H)ⱼ (II)
dans laquelle
X = indépendamment les uns des autres, O, NH, un groupe N-alkyle, N-aryle ou S,
j = 1-10,
et
Z = un radical organique quelconque, chaque X étant relié à un atome de carbone du radical organique,
avec un ou plusieurs réactifs convenant à une polymérisation avec décyclisation, choisis parmi les oxydes d'alkylène, les éthers glycidyliques, les lactones et les anhydrides d'acides cycliques, de préférence le ou les époxydes,
(b) réaction du mélange réactionnel obtenu dans l'étape (a) avec du carbonate de glycérol, l'addition du carbonate de glycérol s'effectuant à une vitesse de 0,1 à 10 mol/h, dans chaque par mole de (XH) de la substance de départ utilisée,
(c) réaction du mélange réactionnel obtenu dans l'étape (b) avec un ou plusieurs
**caractérisé en ce que** les polyéthers ramifiés comprennent au moins un motif structural -O-C(O)-O-.

2. Procédé selon la revendication 1, **caractérisé en ce que** l'addition du carbonate de glycérol s'effectue à une vitesse de 0,5 à 5 mol/h, de préférence de 1 à 2,5 mol/h, dans chaque cas par mole (XH) de la substance de départ utilisée.

3. Procédé selon l'une des revendications 1 ou 2, **caractérisé en ce que** la réaction dans les étapes (a) et (c) est une alcoxylation.

4. Procédé selon au moins l'une des revendications 1 à 3, **caractérisé en ce que** la substance de départ (II) est un composé alkyle, aryle ou aralkyle saturé ou insaturé, avec j = 1 à 3.

5. Procédé selon la revendication 4, **caractérisé en ce que** la substance de départ est un composé alkyle, aryle ou aralkyle saturé ou insaturé, avec X = O et j = 1 à 3.

6. Polyéthers ramifiés de formule (I)
Z(-X-M1ᵢ₁-M2ᵢ₂-M3ᵢ₃-M4ᵢ₄-M5ᵢ₅-M6ᵢ₆-M7ᵢ₇-M8ᵢ₈-M9ᵢ₉-M10ᵢ₁₀-M11ᵢ₁₁-Jᵢ₁₂)i(-X-J)ₖ (I)
dans laquelle
i = 1 à 10, de préférence 1 à 5, préférentiellement 1, 2 ou 3,
k = 0 à 9, de préférence 0 à 5, préférentiellement 1 à 3,
i+k = 1 à 10, préférentiellement 1 à 5, d'une manière particulièrement préférée de 2 à 3,
i1 à i12 = chacun, indépendamment des autres, 0 à 100, et préférentiellement 1 à 30,
X = O, NH, un groupe N-alkyle, N-aryle ou S, identiques ou différents,
Z = un radical organique quelconque, chaque X étant relié à un atome de carbone du radical organique,
J représente, chacun indépendamment des autres, un atome d'hydrogène, un radical hydrocarboné ayant 1 à 30 atomes de carbone, à chaîne droite, cyclique ou ramifié, aliphatique ou aromatique, insaturé ou insaturé, un radical acide carboxylique ayant 1 à 30 atomes de carbone, ou un radical fonctionnel, organique, saturé ou insaturé, substitué par des hétéroatomes, 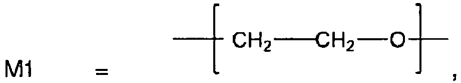 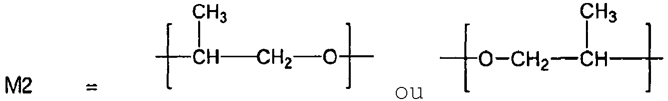 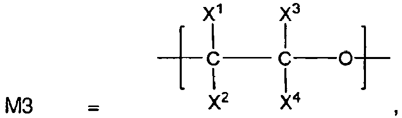
où, dans M3, X¹ à X⁴ représentent chacun indépendamment des autres un atome d'hydrogène ou un radical hydrocarboné à chaîne droite, cyclique ou ramifié, aliphatique ou aromatique, saturé ou insaturé, ayant 1 à 50 atomes de carbone, de préférence 2 à 50 atomes de carbone, qui éventuellement peuvent contenir des atomes d'halogène, à la condition que X¹ à X⁴ ne soient pas choisis de telle sorte que M3 soit égal à M1 ou M2, 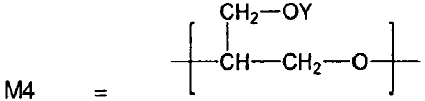 où Y représente chacun indépendamment des autres un radical hydrocarboné à chaîne droite, cyclique ou ramifié, aliphatique ou aromatique, saturé ou insaturé, ayant 2 à 30 atomes de carbone, qui peut contenir aussi des hétéroatomes, 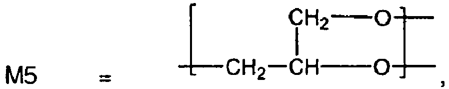 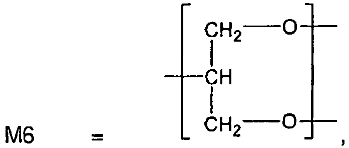 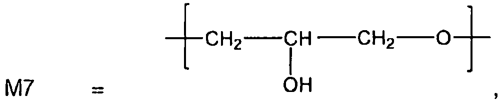 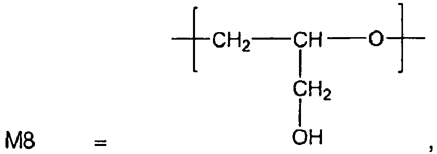 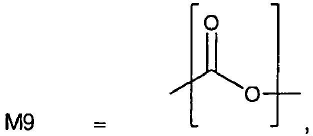 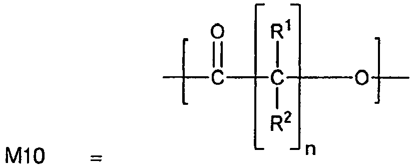 où R1 et R2 représentent chacun indépendamment de l'autre un atome d'hydrogène, un groupe alkyle, alcoxy, aryle ou aralkyle, ayant de préférence 1 à 15 atomes de carbone,
et aussi n représente, chacun indépendamment des autres, une valeur de 3 à 8, auquel cas tant n que R¹ et R² peuvent dans chaque motif M10 être identiques ou différents, 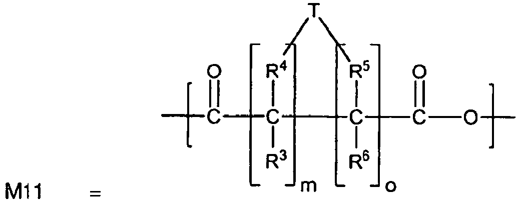 où R³, R⁴, R⁵ et R⁶ peuvent chacun indépendamment des autres représenter un atome d'hydrogène et/ou un radical organique, de préférence H, un groupe alkyle, alcényle, alkylidène, alcoxy, aryle et/ou aralkyle, m et o représentent chacun indépendamment de l'autre 1 à 8, éventuellement R³ et/ou R⁶ peuvent aussi ne pas être présents, éventuellement les radicaux R³ et R⁵ peuvent aussi former une liaison (quand m = o = 1), de sorte qu'il se crée une double liaison, en outre les radicaux hydrocarbonés R⁴ et R⁵ peuvent être pontés par un pontage cycloaliphatique ou aromatique par le fragment T (de préférence, m et o valent alors chacun 1), et T peut être un radical tant alkylène qu'alcénylène divalent, qui peut porter des substituants supplémentaires, et tant les indices m et o que les radicaux T, R³, R⁴, R⁵ et R⁶, peuvent dans chaque motif M11 être identiques ou différents,
le motif M1 à M11 pouvant tant être disposés selon des proportions quelconques par blocs, d'une manière alternée ou statistique, que présenter un gradient de répartition, et en particulier le motif M1 à M4 pouvant être librement permutés, à la condition que i9 vaille de 0,1 à 100, qu'au moins un motif M5 ou M6 soit présent, dans lequel aucune extrémité n'est suivie d'un radical J, et que chaque extrémité soit suivie d'au moins un motif choisi parmi M1, M2 et M3, et que deux motifs de type M9 ne se suivent pas l'un l'autre,

7. Composé selon la revendication 6, **caractérisé en ce que** le radical J dans la formule (I) est un atome d'hydrogène, un radical méthyle ou acétyle.

8. Composé selon la revendication 6 ou 7, **caractérisé en ce que** la somme ∑i5 à i9 ≥ i+1.

9. Composé selon au moins l'une des revendications 6 à 8, **caractérisé en ce que** i1 est supérieur à 0, et i2, i3 et i4 valent chacun 0.

10. Composé selon au moins l'une des revendications 6 à 9, **caractérisé en ce que** ∑i5 + i6 ≥ i+1.

11. Composé selon l'une des revendications 6 à 10, **caractérisé en ce que** le motif M9 est directement relié à un motif choisi parmi M5, M6, M7 ou M8.

12. Composition contenant un composé selon au moins l'une des revendications 6 à 11.

13. Composé selon l'une des revendications 6 à 11, ou composition selon la revendication 12, pouvant être obtenu par au moins l'un des procédés selon au moins l'une des revendications 1 à 5.

14. Utilisation d'un composé ou d'une composition selon au moins l'une des revendications 6 à 13 en tant que substances tensioactives, en tant qu'additif pour des formulations céramiques, en tant qu'additif dans des compositions de revêtement, des mélanges à mouler polymères ou des thermoplastiques, en tant qu'additif alimentaire, en tant qu'agent de réticulation, en tant qu'épaississant, en tant qu'additif pour composés de polyuréthanne, lors de la fabrication de peintures, d'adhésifs, en tant que support de catalyseurs ou en technique biomédicale d'une manière générale, ou en tant qu'additif pour des formulations cosmétiques et des nettoyants.
